(19) Europäisches Patentamt
European Patent Office
Office européen des brevets

(11) **EP 4 585 894 A1**

(12) **EUROPEAN PATENT APPLICATION**
published in accordance with Art. 153(4) EPC

(43) Date of publication:
**16.07.2025   Bulletin 2025/29**

(51) International Patent Classification (IPC):
***G01M 11/02*** *(2006.01)*

(21) Application number: 23862769.9

(52) Cooperative Patent Classification (CPC):
**G01M 11/02**

(22) Date of filing: **30.06.2023**

(86) International application number:
**PCT/JP2023/024437**

(87) International publication number:
**WO 2024/053224 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **07.09.2022   JP 2022141933**

(71) Applicant: **SUMITOMO ELECTRIC INDUSTRIES,
LTD.**
**Osaka-shi, Osaka 541-0041 (JP)**

(72) Inventors:
• **KOBAYASHI Yuto**
**Osaka-shi, Osaka 541-0041 (JP)**
• **HASEGAWA Takemi**
**Osaka-shi, Osaka 541-0041 (JP)**
• **HAYASHI Tetsuya**
**Osaka-shi, Osaka 541-0041 (JP)**

(74) Representative: **TBK**
**Bavariaring 4-6**
**80336 München (DE)**

(54) **OPTICAL CHARACTERISTIC MEASUREMENT DEVICE AND OPTICAL CHARACTERISTIC MEASUREMENT METHOD**

(57)    An optical characteristic measurement system according to the present disclosure comprises: a light source that is capable of causing pulsed light to enter a first core of a multicore optical fiber; a light receiver that is capable of receiving second backscattered light from a second core of the multicore optical fiber; and an arithmetic device that calculates a backscattered crosstalk index on the basis of at least the light intensity of the second backscattered light. The arithmetic device comprises: a data processing unit that acquires, in association with each position from one end to a measurement position, the light intensity of the second backscattered light at each time when the light receiver receives the light; and an arithmetic processing unit that calculates, as the backscatter crosstalk index, a term which includes the ratio of an integral value obtained by integrating the light intensity of the second backscattered light corresponding to each position of the second core from the one end to the measurement position to a loss value representing transmission losses of the multicore optical fiber when the light travels through the first core from the one end to the measurement position.

**FIG. 1**

**Description**

TECHNICAL FIELD

The present disclosure relates to an optical characteristic measuring system and an optical characteristic measuring method. This application claims priority from Japanese Patent Application No. 2022-141933 filed on September 7, 2022, and the entire contents of the Japanese patent application are incorporated herein by reference.

BACKGROUND ART

It is known that in a multi-core optical fiber having a plurality of cores, crosstalk occurs between the plurality of cores. For example, patent literature 1, non-patent literature 1, and non-patent literature 2 disclose methods for measuring such crosstalk. In these methods, one or more optical time domain reflectometer (OTDR) devices are connected to one end of a multi-core optical fiber, and pulsed test light is incident on one core of the multi-core optical fiber from the one end. Then, the backscattered light returning to the one end by backscattering in the plurality of cores is input to the OTDR devices, and crosstalk is measured based on the intensity of the backscattered light.

CITATION LIST

PATENT LITERATURE

Patent literature 1: Japanese Unexamined Patent Application Publication No. 2012-202827

NON PATENT LITERATURE

Non-patent literature 1: M. Nakazawa, at al., "Nondestructive measurement of mode couplings along a multi-core fiber using a synchronous multi-channel OTDR", Opt.Express, Vol.20, No.11, pp.12530-12540 (2012). Non-patent literature 2: A. Nakamura, at al., "Optical Time Domain Reflectometry for Simultaneously CharacterizingForward and Backward Crosstalk along Multi-core Fibers",IEEE, Journal of Lightwave Technology, pp.1-7 (2022). Non-patent literature 3: Recommendation ITU-TG. 650.1, "Definitions and test methods for linear, deterministic attributes of single-mode fibre and cable", (2020).

SUMMARY OF INVENTION

An optical characteristic measuring system according to an embodiment of the present disclosure is an optical characteristic measuring system configured to measure an optical characteristic of a multi-core optical fiber including at least a first core and a second core. The optical characteristic measuring system includes at least one light source optically coupled to the first core and being capable of causing pulsed light to be incident on the first core from one end of the multi-core optical fiber, at least one light receiver optically coupled to at least the second core and being capable of receiving, among first backscattered light and second backscattered light respectively emitted from the first core and the second core at the one end as a result of the incidence of the pulsed light on the first core, at least the second backscattered light, and an arithmetic device communicably connected to the light receiver and configured to, based on a light intensity of at least the second backscattered light, calculate a backscattering crosstalk index representing backscattering crosstalk related to a light intensity of the second backscattered light that moves from the first core to the second core and returns to the one end as part of the pulsed light. The arithmetic device includes a data processor configured to acquire a light intensity of the second backscattered light at each time when the light receiver receives the second backscattered light, in association with each position from the one end to any measurement position in a longitudinal direction of the multi-core optical fiber, and an arithmetic processor configured to calculate, as the backscattering crosstalk index, a term including a ratio of an integral value obtained by integrating the light intensity of the second backscattered light corresponding to each position of the second core from the one end to the measurement position to a loss value representing a transmission loss of the multi-core optical fiber when light moves in the first core from the one end to the measurement position.

BRIEF DESCRIPTION OF THE DRAWINGS

FIG. 1 is a configuration diagram showing an example of an optical characteristic measuring system according to an embodiment.

FIG. 2 is a diagram for explaining the principle of crosstalk in the multi-core optical fiber shown in FIG. 1.

FIG. 3 is a block diagram showing an example of a functional configuration of the arithmetic device shown in FIG. 1.

FIG. 4 is a graph showing the relationship between the position in the longitudinal direction of the multi-core optical fiber and the power coupling coefficient.

FIG. 5 is a graph showing the relationship between the position in the longitudinal direction of the multi-core optical fiber and the backscattering crosstalk.

FIG. 6 is another graph showing the relationship between the position in the longitudinal direction of the multi-core optical fiber and the power coupling coefficient.

FIG. 7 is another graph showing the relationship between the position in the longitudinal direction of the multi-core optical fiber and the backscattering crosstalk.

FIG. 8 is a flowchart showing an example of an optical characteristic measuring method to be executed by using the optical characteristic measuring system shown in FIG. 1.

FIG. 9 is a flowchart showing another example of an optical characteristic measuring method.

FIG. 10 is a flowchart showing another example of an optical characteristic measuring method.

FIG. 11 is a flowchart showing another example of an optical characteristic measuring method.

FIG. 12 is a configuration diagram showing an optical characteristic measuring system according to a modification.

DETAILED DESCRIPTION

[Problems to be Solved by Invention]

Crosstalk that may occur between the cores of the multi-core optical fiber includes an optical signal that has moved from a core of a coupling source to a core of a coupling destination and propagates in the same direction as the propagation direction of the optical signal in the core of the coupling source (hereinafter referred to as "parallel crosstalk") and an optical signal that has moved from a core of a coupling source to a core of a coupling destination and propagates in a direction opposite to the propagation direction of the optical signal in the core of the coupling source (hereinafter referred to as "opposite crosstalk"). Among the opposite crosstalk, crosstalk caused by backscattering (hereinafter referred to as "backscattering crosstalk") is often a main factor of the opposite crosstalk. When a multi-core optical fiber is put into practical use, between adjacent cores, a signal propagates in one core, while in the other core, a signal propagates in a direction of backscattering with respect to the signal. Thus, it is very important to measure and evaluate the backscattering crosstalk in practical use of the multi-core optical fiber.

However, patent literature 1 and non-patent literature 1 do not disclose a method for deriving the backscattering crosstalk. Non-patent literature 2 discloses a method of deriving the backscattering crosstalk. However, in this method, an assumption for simplifying the derivation of the backscattering crosstalk is made, and under this assumption, the backscattering crosstalk may not be accurately evaluated.

The present disclosure provides an optical characteristic measuring system and an optical characteristic measuring method capable of more accurately evaluating backscattering crosstalk between cores of a multi-core optical fiber.

[Advantageous Effects of Present Disclosure]

According to an optical characteristic measuring system and an optical characteristic measuring method according to the present disclosure, it is possible to more accurately evaluate backscattering crosstalk between cores of a multi-core optical fiber.

[Description of Embodiments of Present Disclosure]

First, the contents of embodiments of the present disclosure will be listed and explained.

(1) An optical characteristic measuring system according to an embodiment of the present disclosure is an optical characteristic measuring system configured to measure an optical characteristic of a multi-core optical fiber including at least a first core and a second core. The system includes at least one light source optically coupled to the first core and being capable of causing pulsed light to be incident on the first core from one end of the multi-core optical fiber. The optical characteristic measuring system includes at least one light receiver optically coupled to at least the second core and being capable of receiving, among first backscattered light and second backscattered light respectively emitted from the first core and the second core at the one end as a result of the incidence of the pulsed light on the first core, at least the second backscattered light, and an arithmetic device communicably connected to the light receiver and configured to, based on a light intensity of at least the second backscattered light, calculate a backscattering crosstalk index representing backscattering crosstalk related to a light intensity of the second backscattered light that moves from the first core to the second core and returns to the one end as part of the pulsed light. The arithmetic device includes a data processor configured to acquire a light intensity of the second backscattered light at each time when the light receiver receives the second backscattered light, in association with each position from the one end to any measurement position in a longitudinal direction of the multi-core optical fiber, and an arithmetic processor configured to calculate, as the backscattering crosstalk index, a term including a ratio of an integral value obtained by integrating the light intensity of the second backscattered light corresponding to each position of the second core from the one end to the measurement position to a loss value representing a transmission loss of the multi-core optical fiber when light moves in the first core from the one end to the measurement position.

In the method described in non-patent literature 2, backscattering crosstalk is derived under the assumption that the power coupling coefficient between cores used for deriving the backscattering crosstalk is constant regardless of the position of the multi-core optical fiber (that is, the power coupling coefficient has no position dependency). Thus, when the power coupling coefficient has position dependency, there is a problem that backscattering crosstalk cannot be accurately evaluated. Thus, the present inventors have conducted intensive studies on a method for accurately evaluating backscattering crosstalk in consideration of the position dependency of the power coupling coefficient. The backscattering crosstalk can be defined by a ratio of the light intensity caused by backscattering among light that moves from the first core to the second core and returns to one end of the multi-core optical fiber to the light intensity that is incident on the first core from the one end and reaches the measurement position. The present inventors have found in the course of repeated studies that the light intensity at the measurement position of the first core can be estimated by a loss value representing the transmission loss of the multi-core optical fiber when light moves from one end of the first core to the measurement position. Further, the present inventors have conceived that the light intensity returning to the one end in the second core is represented by an integral value of the light intensity of the second backscattered light corresponding to each position from the one end to any measurement position when pulsed light is incident on the first core. The present inventors have found that a term including a ratio of an integral value to a loss value can be treated as a backscattering crosstalk index representing backscattering crosstalk. In this way, by using the integral value of the light intensity of the second backscattered light, the backscattering crosstalk index can be calculated using the light intensity of all the second backscattered light from the one end to the measurement position. Thus, according to the optical characteristic measuring system described above, even when the power coupling coefficient has position dependency, it is possible to accurately evaluate the backscattering crosstalk.

(2) In the optical characteristic measuring system according to the above (1), the light receiver may be optically coupled to the first core and may be capable of receiving the first backscattered light emitted from the first core at the one end. The data processor may acquire a light intensity of the first backscattered light at each time when the light receiver receives the first backscattered light, in association with each position from the one end to the measurement position. The arithmetic processor may calculate the loss value representing the transmission loss of the multi-core optical fiber when the pulsed light moves in the first core from the one end to the measurement position, using the light intensity of the first backscattered light corresponding to each position of the first core from the one end to the measurement position. In this case, a loss value representing a transmission loss at any position of the multi-core optical fiber can be more accurately calculated using the light intensity of the first backscattered light emitted from the first core. As a result, it is possible to more accurately evaluate the backscattering crosstalk at any position of the multi-core optical fiber by using the backscattering crosstalk index calculated as the term including the ratio of the integral value to the loss value.

(3) In the optical characteristic measuring system according to the above (1) or (2), the arithmetic processor may calculate the ratio expressed by Equation (3) below using the loss value expressed by Equation (1) below and the integral value expressed by Equation (2) below, when $D_{11}$ denotes the loss value and $D_2$ [W·m] denotes the integral value. The present inventors have found that a term including a ratio $D_2/D_{11}$ expressed by Equation (3) can be used as a backscattering crosstalk index proportional to backscattering crosstalk in the course of repeated studies on a mathematical expression for calculating a backscattering crosstalk index. By using the term including the ratio $D_2/D_{11}$, even when the power coupling coefficient between the first core and the second core has position dependency, it is possible to accurately evaluate the backscattering crosstalk.

[Math. 1]

$$D_{11} = \exp(-\alpha z_{\mathrm{L}}) \quad \cdots \quad (1)$$

[Math. 2]

$$D_2 = \int_0^{z_L} P_{bs2}(z)\,dz \quad \cdots (2)$$

[Math. 3]

$$\frac{D_2}{D_{11}} = \frac{\int_0^{z_L} P_{bs2}(z)\,dz}{\exp(-\alpha z_L)} \quad \cdots (3)$$

Where z [m] denotes a position in the longitudinal direction of the multi-core optical fiber when the one end is set as an origin, $P_{bs2}(z)$ [W] denotes a light intensity of the second backscattered light corresponding to the position z [m], $z_L$ [m] denotes the measurement position, and $\alpha$ [/m] denotes a transmission loss coefficient of the multi-core optical fiber.
(4) In the optical characteristic measuring system according to the above (3), the arithmetic processor may calculate the backscattering crosstalk index by multiplying the ratio expressed by Equation (3) by a coefficient $A_1$ [/(W·m)] expressed by Equation (4) below or a coefficient $B_1$ [/(W·m)] expressed by Equation (5) below. The present inventors have found that the backscattering crosstalk can be directly calculated by multiplying the ratio $D_2/D_{11}$ expressed by Equation (3) by the coefficient A [/(W·m)]$_1$ expressed by Equation (4) or coefficient $B_1$ [/(W·m)] expressed by Equation (5) in the course of repeated studies on the mathematical expression for calculating the backscattering crosstalk index. Thus, by using a value obtained by multiplying the ratio $D_2/D_{11}$ by coefficient $A_1$ [/(W·m)] or coefficient $B_1$ [/(W·m)], it is possible to directly and accurately evaluate the backscattering crosstalk.
[Math. 4]

$$A_1 = \frac{1}{\dfrac{V_g W}{2} P_0} \quad \cdots (4)$$

[Math. 5]

$$B_1 = \frac{S \alpha_R}{P_{bs1}(0)} \quad \cdots (5)$$

Where $P_{bs1}(0)$ [W] denotes a light intensity of the first backscattered light corresponding to the one end, $P_0$ [W] denotes a light intensity of the pulsed light, $V_g$ [m/s] denotes a group velocity of the pulsed light when moving through the multi-core optical fiber, W[s] denotes a pulse width of the pulsed light, S denotes a scattering cross-sectional area of the multi-core optical fiber, and $\alpha_R$ [/m] denotes a transmission loss coefficient due to Rayleigh scattering of the multi-core optical fiber.
(5) In the optical characteristic measuring system according to the above (2), the arithmetic processor may calculate the ratio expressed by Equation (8) below using the loss value expressed by Equation (6) below and the integral value expressed by Equation (7) below, when $D_{12}$ [W$^{1/2}$] denotes the transmission loss and $D_2$ [W·m] denotes the integral value. The present inventors have found that a term including the ratio $D_2/D_{12}$ expressed by Equation (8) can be used as a backscattering crosstalk index proportional to backscattering crosstalk in the course of repeated studies on a mathematical expression for calculating a backscattering crosstalk index. By using the term including the ratio $D_2/D_{12}$, it is possible to accurately evaluate the backscattering crosstalk even when the power coupling coefficient between the first core and the second core has position dependency.
[Math. 6]

$$D_{12} = \sqrt{P_{bs1}(z_L)} \quad \cdots (6)$$

[Math. 7]

$$D_2 = \int_0^{z_L} P_{bs2}(z)\,dz \quad \cdots (7)$$

[Math. 8]

$$\frac{D_2}{D_{12}} = \frac{\int_0^{z_{\mathrm{L}}} P_{\mathrm{bs}2}(z)dz}{\sqrt{P_{\mathrm{bs}1}(z_{\mathrm{L}})}} \quad \cdots (8)$$

Where $z$ [m] denotes a position in the longitudinal direction of the multi-core optical fiber when the one end is set as an origin, $P_{\mathrm{bs}1}(z)$ [W] denotes a light intensity of the first backscattered light corresponding to the position $z$ [m], $P_{\mathrm{bs}2}(z)$ [W] denotes a light intensity of the second backscattered light corresponding to the position $z$ [m], and $z_{\mathrm{L}}$ [m] denotes the measurement position.

(6) In the optical characteristic measuring system according to the above (5), the arithmetic processor may calculate the backscattering crosstalk index by multiplying the ratio expressed by Equation (8) by a coefficient $A_2$ [/($W^{1/2} \cdot$m)] expressed by Equation (9) below or a coefficient $B_2$ [/($W^{1/2} \cdot$m)] expressed by Equation (10) below. The present inventors have found that the backscattering crosstalk can be directly calculated by multiplying the ratio $D_2/D_{12}$ expressed by Equation (8) by coefficient $A_2$ [/($W^{1/2} \cdot$m)] expressed by Equation (9) or coefficient $B_2$ [/($W^{1/2} \cdot$m)] expressed by Equation (10) in the course of repeated studies on the mathematical expression for calculating the backscattering crosstalk index. Thus, by using a value obtained by multiplying the ratio $D_2/D_{12}$ by coefficient $A_2$ [/($W^{1/2} \cdot$m)] or coefficient $B_2$ [/($W^{1/2} \cdot$m)], it is possible to directly and accurately evaluate the backscattering crosstalk.

[Math. 9]

$$A_2 = \frac{2\sqrt{P_{\mathrm{bs}1}(0)}}{P_0 V_{\mathrm{g}} W} \quad \cdots (9)$$

[Math. 10]

$$B_2 = \frac{S \alpha_{\mathrm{R}}}{\sqrt{P_{\mathrm{bs}1}(0)}} \quad \cdots (10)$$

Where $P_{\mathrm{bs}1}(0)$ [W] denotes a light intensity of the first backscattered light corresponding to the one end, $P_0$ [W] denotes a light intensity of the pulsed light, $V_{\mathrm{g}}$ [m/s] denotes a group velocity of the pulsed light when moving through the multi-core optical fiber, $W$ [s] denotes a pulse width of the pulsed light, $S$ denotes a scattering cross-sectional area of the multi-core optical fiber, and $\alpha_{\mathrm{R}}$ [/m] denotes a transmission loss coefficient due to Rayleigh scattering of the multi-core optical fiber.

(7) The optical characteristic measuring system according to any one of the above (2) to (6) may further include an optical system configured to guide the pulsed light from the light source to the first core, and guide the first backscattered light from the first core and the second backscattered light from the second core to the light receiver. In this case, it is possible to easily achieve a configuration in which pulsed light is incident on the first core, and the first backscattered light and the second backscattered light respectively emitted from the first core and the second core are received by the light receiver.

(8) The optical characteristic measuring system according to any one of the above (1) to (7) may further include a display unit configured to display a log-log graph presenting a relationship between a position in the longitudinal direction of the multi-core optical fiber and the backscattering crosstalk index. By using the log-log graph in this way, it is possible to easily capture a change in the backscattering crosstalk index with respect to the position of the multi-core optical fiber. This makes it possible to easily evaluate the backscattering crosstalk.

(9) An optical characteristic measuring method according to an embodiment of the present disclosure is an optical characteristic measuring method using an optical characteristic measuring system configured to measure an optical characteristic of a multi-core optical fiber including at least a first core and a second core. The optical characteristic measuring method includes causing pulsed light to be incident on the first core from one end of the multi-core optical fiber, receiving with a light receiver, among first backscattered light and second backscattered light respectively emitted from the first core and the second core at the one end as a result of the incidence of the pulsed light on the first core, at least the second backscattered light, and calculating, based on a intensity of at least the second backscattered light, a backscattering crosstalk index representing backscattering crosstalk related to a light intensity of the second backscattered light that moves from the first core to the second core and returns to the one end as part of the pulsed light. The calculating the backscattering crosstalk index includes acquiring a light intensity of the second backscattered light at each time when the light receiver receives the second backscattered light, in association with each position from the one end to any measurement position in a longitudinal direction of the multi-core optical fiber, and calculating, as the backscattering crosstalk index, a term including a ratio of an integral value obtained by integrating the light intensity of the second backscattered light corresponding to each position of the second core from the one end to the measurement position to a loss value representing a transmission loss of the multi-core optical fiber when light moves in the first core from the one end to the measurement position.

In the method described in non-patent literature 2, backscattering crosstalk is derived under the assumption that the power coupling coefficient between the cores used for deriving the backscattering crosstalk is constant regardless of the position of the multi-core optical fiber (that is, the power coupling coefficient has no position dependency). Thus, when the power coupling coefficient has position dependency, there is a problem that the backscattering crosstalk cannot be accurately evaluated. Thus, the present inventors have conducted intensive studies on a method for accurately evaluating backscattering crosstalk in consideration of the position dependency of the power coupling coefficient. The backscattering crosstalk can be defined as a ratio of the light intensity caused by backscattering among light that moves from the first core to the second core and returns to one end of the multi-core optical fiber to the light intensity that is incident on the first core from the one end and reaches the measurement position. The present inventors have found in the course of repeated studies that the light intensity at the measurement position of the first core can be estimated by a loss value representing the transmission loss of the multi-core optical fiber when light moves from one end of the first core to the measurement position. Further, the present inventors have conceived that the light intensity returning to the one end in the second core is represented by an integral value of the light intensity of the second backscattered light corresponding to each position from the one end to any measurement position when pulsed light is incident on the first core. The present inventors have found that a term including a ratio of an integral value to a loss value can be treated as a backscattering crosstalk index representing backscattering crosstalk. In this way, by using the integral value of the light intensity of the second backscattered light, the backscattering crosstalk index can be calculated using the light intensity of all the second backscattered light from the one end to the measurement position. Thus, according to the optical characteristic measuring method, even when the power coupling coefficient has position dependency, it is possible to accurately evaluate the backscattering crosstalk.

[Details of Embodiments of Present Disclosure]

Specific examples of a measurement system and a measurement method according to embodiments of the present disclosure will be described below with reference to the drawings. The present disclosure is not limited to these examples, but is defined by the scope of the claims, and is intended to include all modifications within the meaning and scope equivalent to the scope of the claims. In the following description, the same elements are denoted by the same reference numerals in the description of the drawings, and redundant description will be appropriately omitted.

[Optical Characteristic Measuring System]

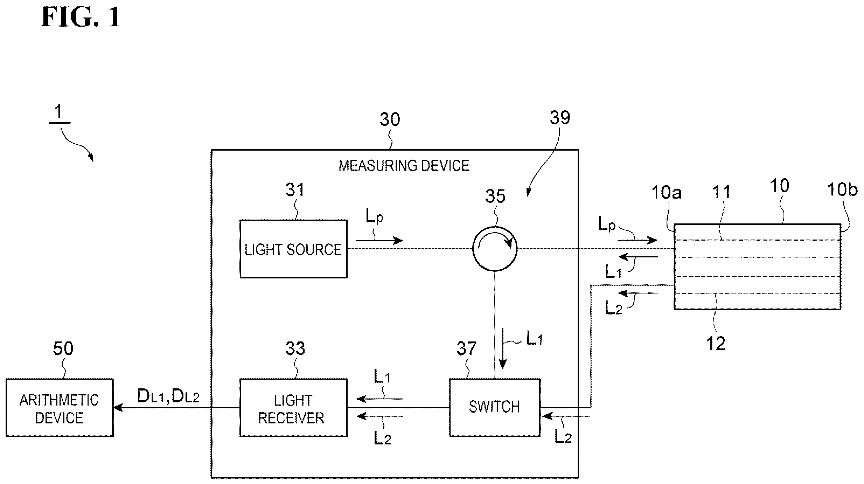

FIG. 1 is a configuration diagram showing an optical characteristic measuring system 1 according to the embodiment. Optical characteristic measuring system 1 is a system for measuring an optical characteristic of a multi-core optical fiber (hereinafter referred to as "MCF") 10 to be measured. MCF 10 includes, for example, a first core 11 and a second core 12. First core 11 and second core 12 extend from one end to the other end in the longitudinal direction of MCF 10. The number of cores included in MCF 10 is not limited to two, and may be three or more. MCF 10 may be, for example, an uncoupled MCF, which allows optical transmission with each core to as a separate channel.

Optical characteristic measuring system 1 includes, for example, a measuring device 30 and an arithmetic device 50. Measuring device 30 is, for example, an optical time domain reflectometer (OTDR) device capable of measuring optical characteristics of MCF 10 using an OTDR method. The OTDR method is widely used as a technique for evaluating the optical characteristics of MCF 10 because it can easily measure the optical characteristics of MCF 10 from one end of MCF 10. In detail, measuring device 30 causes a pulsed light $L_p$ to be incident on one end of MCF 10 of the measurement target, and measures the distance distribution of light intensity (light intensity distribution) of backscattered light returning to the one end of MCF 10. Hereinafter, one end of MCF 10 on which pulsed light $L_p$ is incident is referred to as an "incidence end 10a", and the other end of MCF 10 on the opposite side is referred to as an "emission end 10b".

Arithmetic device 50 calculates a backscattering crosstalk index representing backscattering crosstalk (hereinafter, referred to as "XT") between first core 11 and second core 12 using a result measured by measuring device 30. The backscattering XT index is an example of an optical characteristic of MCF 10. The "backscattering XT index" is an index value representing a change in the "backscattering XT". The index value representing the "backscattering XT" means a value that changes in accordance with a change in the "backscattering XT", that is, a value that changes in accordance with the backscattering XT. The index value representing the "backscattering XT" may be, for example, a value proportional to the "backscattering XT" or a value indicating the "backscattering XT" itself. In the embodiment, the "backscattering XT index" is described as a value indicating the "backscattering XT" itself.

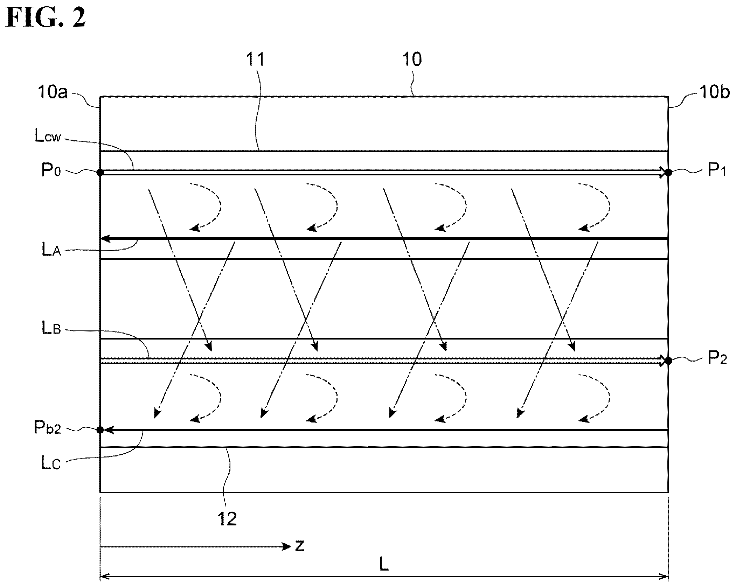

The principle of XT will be described with reference to FIG. 2. FIG. 2 is a diagram for explaining the principle of XT. Here, for the sake of simplicity, it is assumed that a continuous light $L_{cw}$ is incident on incidence end 10a of MCF 10. As shown in FIG. 2, continuous light $L_{cw}$ incident on first core 11 from incidence end 10a moves from incidence end 10a to emission end 10b while causing backscattering and XT in first core 11. In FIG. 2, backscattering is indicated by the dotted line arrow and XT is indicated by the two dot chain line arrow. When continuous light $L_{cw}$ causes backscattering, a light $L_A$, which is part of continuous light $L_{cw}$, moves backward by Rayleigh scattering in first core 11, and moves in first core 11 in the opposite direction and returns to incidence end 10a.

When continuous light $L_{cw}$ causes XT, part of continuous light $L_{cw}$ leaks from first core 11 to second core 12 by mode coupling and propagates through second core 12. Here, the XT includes a phenomenon in which a light $L_B$, which is part of continuous light $L_{cw}$ leaking from first core 11 to second core 12, propagates through second core 12 in the same direction as continuous light $L_{cw}$ propagating through first core 11 (hereinafter, referred to as "parallel XT") and a phenomenon in which a light $L_C$, which is a part of continuous light $L_{cw}$ leaking from first core 11 to second core 12, propagates through second core 12 in a direction opposite to continuous light $L_{cw}$ propagating through first core 11 by backscattering (hereinafter, referred to as "backscattering XT"). The following two cases are considered as the case where the backscattering XT occurs. One is a case where light $L_A$, which is part of the of continuous light $L_{cw}$, is backscattered in first core 11, and further, part of light $L_A$ leaks from first core 11 to second core 12 due to the parallel XT, and the leaked part moves toward incidence end 10a in second core 12. The other is a case where part of continuous light $L_{cw}$ leaks from first core 11 to second core 12 due to the parallel XT, and the leaked part causes backscattering in second core 12. In these cases, light $L_C$ propagating in second core 12 in the opposite direction is generated.

When the light intensity of continuous light $L_{cw}$ at emission end 10b of first core 11 is $P_1$ and the light intensity of the light $L_B$ at emission end 10b of second core 12 is $P_2$, the parallel XT is defined by a ratio $P_2/P_1$ of the light intensity $P_2$ of the light due to backscattering at emission end 10b to the light intensity $P_1$ at emission end 10b. On the other hand, the light intensity $L_C$ at incidence end 10a of second core 12 is $P_{b2}$, the backscattering XT is defined by a ratio $P_{b2}/P_1$ of the light intensity $P_{b2}$ at emission end 10b to the light intensity $P_1$ at emission end 10b. When MCF 10 is put into practical use, in the case where first core 11 and second core 12 are adjacent to each other, an optical signal propagates in second core 12 in the opposite direction to the optical signal propagating in first core 11. Thus, it is very important to measure the backscattering XT, which is often the main factor of the XT traveling in the opposite direction, in practical use in MCF 10.

Non-patent literature 2 discloses a method for measuring the parallel XT and the backscattering XT using an OTDR device. In this method, pulsed test light output from the OTDR device is incident on one end of the MCF, and light intensities corresponding to the light intensities $P_1$, $P_2$, and $P_{b2}$ are estimated based on backscattered light from each core at the one end, thereby deriving optical characteristics such as the parallel XT and the backscattering XT. In this way, in the method using the OTDR device, even in a situation where it is difficult to connect the devices for measurement to both ends of the MCF, it is possible to easily derive the optical characteristics of the MCF based on the information obtained from one end of the MCF only by connecting the OTDR device to the one end of the MCF. Further, according to the method using the OTDR device, it is possible to measure the optical characteristics at any position of the MCF in a non-destructive manner.

However, in the method disclosed in non-patent literature 2, when the backscattering XT is derived, the assumption is made that the power coupling coefficient used for deriving the backscattering XT is constant regardless of the position of the MCF in the longitudinal direction (that is, the power coupling coefficient does not have position dependency). Thus, when the power coupling coefficient changes according to the position of the MCF, there is a problem that the backscattering XT cannot be accurately evaluated. Thus, in the embodiment, a method for accurately evaluating the backscattering XT even when the power coupling coefficient has the position dependency is proposed by focusing on a method for deriving the backscattering XT using the OTDR device. A specific method thereof will be described later.

Refer again to FIG. 1. Measuring device 30 includes, for example, a light source 31, a light receiver 33, a circulator 35, and a switch 37. Light source 31, light receiver 33, circulator 35, and switch 37 are connected with an optical waveguide such as a single mode optical fiber (SMF). Circulator 35 and switch 37 are connected to incidence end 10a of MCF 10 with optical devices such as fan-in/fan-out (FIFO).

Light source 31 is optically coupled to first core 11 at incidence end 10a via circulator 35. Specifically, light source 31 is connected to an input port of circulator 35 through an optical waveguide. An input/output port of circulator 35 is connected to first core 11 at incidence end 10a through another optical wave guide. Light source 31 is, for example, a pulsed light source that outputs pulsed light $L_p$. Pulsed light $L_p$ is light whose output peaks repeatedly appear at predetermined time intervals. Pulsed light $L_p$ output from light source 31 is incident on first core 11 at incidence end 10a via circulator 35. As a result of the incidence of pulsed light $L_p$ on first core 11, part of pulsed light $L_p$ returns to incidence end 10a by backscattering in first core 11. Further, as a result of the incidence of pulsed light $L_p$ on first core 11, another part of pulsed light $L_p$ moves from first core 11 to second core 12 and returns to incidence end 10a by backscattering XT. Hereinafter, the light returning to incidence end 10a in first core 11 is referred to as a "first backscattered light $L_1$", and the light returning to incidence end 10a in second core 12 is referred to as a "second backscattered light $L_2$".

Light receiver 33 is optically coupled to second core 12 at incidence end 10a via switch 37. Further, light receiver 33 is optically coupled to first core 11 at incidence end 10a via switch 37 and circulator 35. Specifically, light receiver 33 is connected to an output port of switch 37 through an optical waveguide. An input port of switch 37 is connected to second core 12 at incidence end 10a through another optical wave guide. Another input port of switch 37 is connected to an output port of circulator 35 through another optical waveguide. Switch 37 switches optical paths connecting two input ports and an output port.

First backscattered light $L_1$ emitted from incidence end 10a of first core 11 is received by light receiver 33 via circulator 35 and switch 37. Second backscattered light $L_2$ emitted from incidence end 10a of second core 12 is received by light receiver 33 via switch 37. In this way, circulator 35 and switch 37 constitute an optical system 39 that guides pulsed light $L_p$ from light source 31 to first core 11, and guides first backscattered light $L_1$ from first core 11 and second backscattered light $L_2$ from second core 12 to light receiver 33.

Light receiver 33 measures the light intensity of first backscattered light $L_1$ at a predetermined sampling period from the time when light source 31 emits pulsed light $L_p$. Then, light receiver 33 transmits the measured light intensity of first backscattered light $L_1$ to arithmetic device 50 as a first light intensity data $D_{L1}$ at each sampling period. Further, light receiver 33 measures the light intensity of second backscattered light $L_2$ at a predetermined sampling period from the time when light source 31 emits pulsed light $L_p$. Then, light receiver 33 transmits the measured light intensity of second backscattered light $L_2$ to arithmetic device 50 as a second light intensity data $D_{L2}$ at each sampling period. The predetermined sampling period may be set by a sampling period generator synchronized with light source 31.

Arithmetic device 50 is communicably connected to measuring device 30. Arithmetic device 50 calculates the backscattering XT using first light intensity data $D_{L1}$ and second light intensity data $D_{L2}$ from measuring device 30. In the embodiment, as described above, the "backscattering XT index" is described as a value indicating the "backscattering XT" itself. Thus, in the following description, the "backscattering XT" may be replaced with the "backscattering XT index" as appropriate. Arithmetic device 50 is physically configured as a computer including a central processing unit (CPU), a random access memory (RAM) and a read only memory (ROM) as main storage devices, an auxiliary storage device such as a hard disk device, an input device such as an input key as an input device, an output device such as a display, and a communication module.

Each function of arithmetic device 50 is achieved by reading predetermined computer software in hardware such as a CPU, a RAM, and a ROM, operating an input device, an output device, and a communication module under the control of the CPU, and reading and writing data in the main storage device and the auxiliary storage device. The arrangement of arithmetic device 50 is not particularly limited. Arithmetic device 50 does not have to be disposed outside measuring device 30. Arithmetic device 50 may be disposed inside measuring device 30. That is, arithmetic device 50 may be incorporated into a part of measuring device 30.

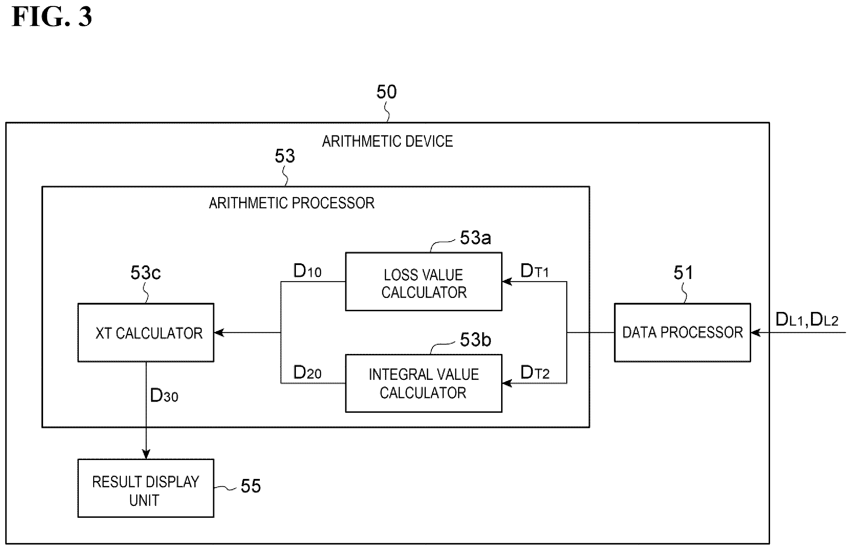

FIG. 3 is a block diagram showing a functional configuration of arithmetic device 50. As shown in FIG. 3, arithmetic device 50 includes, for example, a data processor 51, an arithmetic processor 53, and a result display unit 55 (example of "display unit") as functional components. Data processor 51 receives first light intensity data $D_{L1}$ transmitted from light receiver 33 at a predetermined sampling period, and stores the light intensity of first backscattered light $L_1$ indicated by first light intensity data $D_{L1}$ in time-series order. Then, data processor 51 converts the time from the time when light source 31 emits pulsed light $L_p$ to the time when light receiver 33 receives first backscattered light $L_1$ into the length of MCF 10 from incidence end 10a. Thus, data processor 51 stores the light intensity of first backscattered light $L_1$ at each time when light receiver 33 receives first backscattered light $L_1$, in association with each position from incidence end 10a to emission end 10b of MCF 10 in the longitudinal direction.

Data processor 51 outputs a first time series data $D_{T1}$, which is time-series data of first light intensity data $D_{L1}$ associated with each position in the longitudinal direction of MCF 10, to arithmetic processor 53. Data processor 51 may output first time series data $D_{T1}$ to arithmetic processor 53 at a timing when all first light intensity data $D_{L1}$ from incidence end 10a to emission end 10b of MCF 10 are acquired. Every time Data processor 51 acquires first light intensity data $D_{L1}$, data processor 51 may output first time series data $D_{T1}$ until first light intensity data $D_{L1}$ is acquired to arithmetic processor 53 in real time.

Data processor 51 receives second light intensity data $D_{L2}$ transmitted from light receiver 33 at a predetermined sampling period, and stores the light intensity of second backscattered light $L_2$ indicated by second light intensity data $D_{L2}$ in time-series order. Then, data processor 51 converts the time from the time when light source 31 emits pulsed light $L_p$ to the time when light receiver 33 receives second backscattered light $L_2$ into the length of MCF 10 from incidence end 10a. Thus, data processor 51 stores the light intensity of second backscattered light $L_2$ at each time when light receiver 33 receives second backscattered light $L_2$ in association with each position from incidence end 10a to emission end 10b of MCF 10 in the longitudinal direction. For example, after the measurement of first core 11 for one pulse is completed, data processor 51 switches switch 37 to perform the measurement of second core 12 for the next pulse, and thus can acquire first light intensity data $D_{L1}$ and second light intensity data $D_{12}$ in a distinguishable manner. More specifically, in a state where light receiver 33 and first core 11 are optically coupled, when, for example, N pulses (N is an integer of 1 or more) are incident on first core 11, data processor 51 may acquire the light intensity of first backscattered light $L_1$ obtained from first

core 11 N times, and may acquire the average of the light intensities as first light intensity data $D_{L1}$. After the measurement of first light intensity data $D_{L1}$ is completed and light receiver 33 and second core 12 are switched to the optically coupled state by switch 37, when the pulses are incident on first core 11 N times, data processor 51 may acquire the light intensity of second backscattered light $L_2$ obtained from second core 12 N times, and may acquire the average of the light intensity as second light intensity data $D_{L2}$.

Data processor 51 outputs a second time series data $D_{T2}$, which is time-series data of second light intensity data $D_{L2}$ associated with each position in the longitudinal direction of MCF 10, to arithmetic processor 53. Data processor 51 may output second time series data $D_{T2}$ to arithmetic processor 53 at a timing when all second light intensity data $D_{L2}$ from incidence end 10a to emission end 10b in MCF 10 are acquired. Every time data processor 51 acquires second light intensity data $D_{L2}$, data processor 51 may output second time series data $D_{T2}$ until second light intensity data $D_{L2}$ is acquired to arithmetic processor 53 in real time.

Arithmetic processor 53 calculates backscattering XT using first time series data $D_{T1}$ and second time series data $D_{T2}$ output from data processor 51. First, the theoretical equation of backscattering XT will be described with reference to FIG. 2 again. Here, as shown in FIG. 2, it is assumed that continuous light $L_{cw}$ having a light intensity $P_0$ is incident on first core 11 from incidence end 10a.

When the light intensity of first core 11 at emission end 10b is $P_1$ and the light intensity of second core 12 at emission end 10b is $P_2$, the light intensity $P_1$ and the light intensity $P_2$ can be expressed by the following Equation (11) and Equation (12), respectively. The Equations (11) and (12) can be derived based on the description of non-patent literature 2, for example.

[Math. 11]

$$P_1 = \exp(-\alpha L)P_0 \quad \cdots (11)$$

[Math. 12]

$$P_2 = hL \exp(-\alpha L)P_0 \quad \cdots (12)$$

In Equations (11) and (12), $P_0$ represents the light intensity incident on first core 11, $\alpha$ represents the transmission loss coefficient of MCF 10, h represents the power coupling coefficient between first core 11 and second core 12, and L represents the total length of MCF 10 in the longitudinal direction. Where, in Equations (11) and (12), an approximation that hL is sufficiently smaller than 1 (hL << 1) is used. The approximation of hL << 1 indicates that XT is sufficiently small. Thus, the approximation of hL << 1 is valid for uncoupled MCF.

When a position of MCF 10 in the longitudinal direction defined with incidence end 10a of MCF 10 as a reference (that is, origin) is z and light intensity backscattered from position z to position z + dz is $dP_{b2}$, the light intensity $dP_{b2}$ can be represented by the following Equation (13).

[Math. 13]

$$dP_{b2} = 2hz \exp(-2\alpha z)P_0 S \alpha_R dz \quad \cdots (13)$$

In the Equation (13), S represents a scattering cross-sectional area of MCF 10, and $\alpha_R$ represents a transmission loss coefficient of MCF 10 due to Rayleigh scattering. When the integral value of the light intensity $dP_{b2}$ obtained by integrating the light intensity $dP_{b2}$ from incidence end 10a to emission end 10b (that is from z = 0 to z = L) is $P_{b2}$, the integral value $P_{b2}$ can be expressed by the following Equation (14).

[Math. 14]

$$P_{b2} = \int_0^L dP_{b2} = P_0 \frac{S\alpha_R}{\alpha} hL \left[ \frac{1 - \exp(-2\alpha L)}{2\alpha L} - \exp(-2\alpha L) \right] \quad \cdots (14)$$

The integral value $P_{b2}$ corresponds to the light intensity of second core 12 at incidence end 10a. Thus, the backscattering XT can be defined by a ratio $P_{b2}/P_1$ of the integral value $P_{b2}$ of second core 12 to the light intensity $P_1$ of first core 11 at emission end 10b. Thus, when the backscattering XT is represented by $XT_b$, $XT_b$ can be represented by the following Equation (15).

[Math. 15]

$$XT_b = \frac{P_{b2}}{P_1} = \frac{S\alpha_R}{\alpha}hL\left[\frac{\sinh(\alpha L)}{\alpha L} - \exp(-\alpha L)\right] \cdots (15)$$

Next, a method of deriving the backscattering XT using the OTDR device will be described. Here, it is assumed that pulsed light $L_p$ having a pulse width W and the light intensity $P_0$ is incident on first core 11 at incidence end 10a. The group velocity of pulsed light $L_p$ when guided through first core 11 and second core 12 is denoted by $V_g$. In this case, $XT_b$ is calculated using first backscattered light $L_1$ and second backscattered light $L_2$ respectively emitted from first core 11 and second core 12 at incidence end 10a.

When the light intensity of first backscattered light $L_1$ backscattered at a position z of first core 11 is $P_{bs1}(z)$ and the light intensity of second backscattered light $L_2$ backscattered at the position z of second core 12 is $P_{bs2}(z)$, the light intensity $P_{bs1}(z)$ and the light intensity $P_{bs2}(z)$ can be expressed by the following Equation (16) and Equation (17), respectively.
[Math. 16]

$$P_{bs1}(z) = P_0 S \frac{V_g W}{2}\alpha_R \exp(-2\alpha z) \cdots (16)$$

[Math. 17]

$$P_{bs2}(z) = 2hzP_0 S \frac{V_g W}{2}\alpha_R \exp(-2\alpha z) \cdots (17)$$

Where, in Equations (16) and (17), an approximation that hz is sufficiently smaller than 1 (hz << 1) is used. Further, in Equations (16) and (17), boundary conditions are set such that the light intensity incident on first core 11 at incidence end 10a (z = 0) is $P_0$ and the light intensity incident on second core 12 is zero.

When the light intensity $P_{bs2}(z)$ is integrated in the same manner as when the theoretical equation of the backscattering XT is obtained, the integral value of the light intensity $P_{bs2}(z)$ corresponding to each position from incidence end 10a to emission end 10b (hereinafter, referred to as a "light intensity integral value $D_2$") can be expressed by the following Equation (16) using the Equations (14) and (15). Light intensity integral value $D_2$ of Equation (16) corresponds to the integral value $P_{b2}$ of Equation (14) of the theoretical equation described above.
[Math. 18]

$$D_2 = \int_0^L P_{bs2}(z)dz = \frac{S\alpha_R}{2\alpha}\frac{V_g W}{2}P_0 h\left[\frac{1-\exp(-2\alpha L)}{\alpha} - 2L\exp(-2\alpha L)\right] \cdots (18)$$

On the other hand, in the method using the OTDR device, the light intensity $P_1$ (that is, the light intensity which is incident on first core 11 from incidence end 10a and is emitted from emission end 10b) of the above-described theoretical equation of formula (11) cannot be directly measured. Thus, considering that exp(-$\alpha$L) is a value (hereinafter, referred to as a "loss value $D_{11}$") representing the transmission loss of MCF 10 when light ("pulsed light $L_p$" in the embodiment) is transmitted from incidence end 10a to emission end 10b and changes depending on the light intensity $P_1$, it is considered to estimate the light intensity $P_1$ using loss value $D_{11}$. Then, it is considered that the backscattering XT can be calculated by taking a ratio $D_2/D_{11}$ of light intensity integral value $D_2$ expressed by Equation (18) to loss value $D_{11}$ expressed by Equation (19) below. A transmission loss coefficient $\alpha$ can be obtained by, for example, a method described in non-patent literature 3. However, in non-patent literature 3, the unit of the transmission loss coefficient $\alpha$ is indicated by (dB/unit length), but in the present disclosure, the unit of the transmission loss coefficient $\alpha$ is indicated by (/unit length). The conversion of the unit can be performed by multiplying the transmission loss coefficient $\alpha$ in non-patent literature 3 by ln(10)/10.
[Math. 19]

$$D_{11} = \exp(-\alpha L) \cdots (19)$$

The ratio $D_2/D_{11}$ of light intensity integral value $D_2$ to loss value $D_{11}$ is expressed by the following Equation (20). Then, when $XT_b$ of Equation (12) expressed by the theoretical equation described above is substituted into Equation (20), Equation (20) is rewritten as Equation (21) below, and Equation (21) is rewritten as Equation (22) below.

[Math. 20]

$$\frac{D_2}{D_{11}} = \frac{\int_0^L P_{bs2}(z)dz}{\exp(-\alpha L)} = \frac{V_g W}{2} P_0 \frac{S\alpha_R}{\alpha} hL \left[ \frac{\sinh(\alpha L)}{\alpha L} - \exp(-\alpha L) \right] \quad \cdots (20)$$

[Math. 21]

$$\frac{\int_0^L P_{bs2}(z)dz}{\exp(-\alpha L)} = \frac{V_g W}{2} P_0 XT_b \quad \cdots (21)$$

[Math. 22]

$$XT_b = \frac{1}{\frac{V_g W}{2} P_0} \frac{\int_0^L P_{bs2}(z)dz}{\exp(-\alpha L)} \quad \cdots (22)$$

Then, when coefficient $A_1$ expressed by the following Equation (23) is used, Equation (22) can be expressed as the following Equation (24).

[Math. 23]

$$A_1 = \frac{1}{\frac{V_g W}{2} P_0} \quad \cdots (23)$$

[Math. 24]

$$XT_b = A_1 \frac{D_2}{D_{11}} \quad \cdots (24)$$

For coefficient $A_1$ in Equation (23), a group velocity $V_g$ is expressed as in the following Equation (25) using the speed of light c and the effective index of refraction $n_{eff}$ of MCF 10. The effective index of refraction $n_{eff}$ is a constant determined according to MCF 10. The pulse width W is a constant determined by a setting value to light source 31.

[Math. 25]

$$V_g = \frac{c}{n_{eff}} \quad \cdots (25)$$

The light intensity $P_0$ of coefficient $A_1$ may be treated as a constant determined by the setting value to light source 31, but since the light intensity $P_0$ is the light intensity of pulsed light $L_p$ at the time of incidence on incidence end 10a of MCF 10, in practice, loss at the connection point on the path from light source 31 to MCF 10, insertion loss of the media connecting light source 31 and MCF 10, and the like may occur. In particular, the loss at the connection point cannot be easily measured because of a large influence of an error or the like. Thus, the light intensity $P_0$ may be replaced with another constant. For example, when z = 0 is substituted into Equation (16), the light intensity $P_{bs1}(0)$ of first backscattered light $L_1$ at incidence end 10a is expressed as in the following Equation (26), and Equation (26) is rewritten as in the following Equation (27).

[Math. 26]

$$P_{bs1}(0) = P_0 S \alpha_R \frac{V_g W}{2} \quad \cdots (26)$$

[Math. 27]

$$\frac{1}{\dfrac{V_g W}{2} P_0} = \frac{S \alpha_R}{P_{bs1}(0)} \quad \cdots (27)$$

Thus, coefficient $A_1$ expressed by Equation (23) can be rewritten as coefficient $B_1$ expressed by the following Equation (28). In this case, (24) representing $XT_b$ is rewritten as Equation (29) below.

[Math. 28]

$$B_1 = \frac{S \alpha_R}{P_{bs1}(0)} \quad \cdots (28)$$

[Math. 29]

$$XT_b = \frac{S \alpha_R}{P_{bs1}(0)} \frac{\int_0^L P_{bs2}(z)dz}{\exp(-\alpha L)} = B_1 \frac{D_2}{D_{11}} \quad \cdots (29)$$

In this way, $XT_b$ in Equation (24) or Equation (29) can be obtained by multiplying the ratio $D_2/D_{11}$ in Equation (20) by coefficient $A_1$ in Equation (23) or coefficient $B_1$ in Equation (28). That is, both of the term obtained by multiplying the ratio $D_2/D_{11}$ by coefficient $A_1$ and the term obtained by multiplying the ratio $D_2/D_{11}$ by coefficient $B_1$ can be used as the term representing $XT_b$. In Equation (24) expressed using coefficient $A_1$, the assumption is made that the loss in the transmission path between MCF 10 and light source 31 and the loss in the transmission path between MCF 10 and light receiver 33 are both zero. Thus, when these losses are taken into consideration, when the transmission loss of the transmission path through which light enters MCF 10 from light source 31 is $\alpha_{in}$ and the transmission loss of the transmission path through which light enters light receiver 33 from MCF 10 is $\alpha_{out}$, coefficient $A_1$ can be rewritten as in the following Equation (30).

[Math. 30]

$$A_1 = \frac{1}{\alpha_{in} \alpha_{out} \dfrac{V_g W}{2} P_0} \quad \cdots (30)$$

The equation representing $XT_b$ is not limited to the above-described Equation (24) or Equation (29). For example, the transmission loss ($\exp(-\alpha L)$) represented by loss value $D_{11}$ in Equation (24) or Equation (29) can be rewritten as follows. When the transmission loss coefficient $\alpha$ has position dependency, $\exp(-\alpha L)$ can be defined as a ratio of light intensity decreased when pulsed light $L_p$ travels from incidence end 10a to emission end 10b. Thus, $\exp(-\alpha L)$ can be represented by a ratio of the light intensity Pbs1 (L) at emission end 10b of first core 11 to the light intensity Pbs1 (0) at incidence end 10a of first core 11. However, when $\exp(-\alpha L)$ is obtained using first backscattered light $L_1$, the distance that the light moved is doubled because the light is measured after it has moved from incidence end 10a to emission end 10b and then returned from emission end 10b to incidence end 10a. This is equivalent to the light being transmitted twice through MCF 10, and thus, $\exp(-\alpha L)$ can be obtained by calculating the square root of the ratio of the light intensity $P_{bs1}(0)$ to the light intensity $P_{bs2}(L)$. Thus, $\exp(-\alpha L)$ can be expressed as in Equation (31).

[Math. 31]

$$\exp(-\alpha L) = \sqrt{\frac{P_{bs1}(L)}{P_{bs1}(0)}} \quad \cdots (31)$$

When Equation (22) is substituted into Equation (31), Equation (22) is rewritten as the following Equation (32). Here, the square root of the light intensity $P_{bs1}(L)$ in Equation (32) can be treated as a value representing the transmission loss of MCF 10 when pulsed light $L_p$ moves from incidence end 10a to emission end 10b (hereinafter, referred to as a "loss value $D_{12}$"). Thus, when loss value $D_{12}$ expressed by the following Equation (33) and coefficient $A_2$ expressed by the following Equation (33) are used, Equation (32) can be written as the following Equation (35).
[Math. 32]

$$XT_b = \frac{1}{\dfrac{V_g W}{2} P_0} \sqrt{\frac{P_{bs1}(0)}{P_{bs1}(L)}} \int_0^L P_{bs2}(z)dz \quad \cdots (32)$$

[Math. 33]

$$D_{12} = \sqrt{P_{bs1}(L)} \quad \cdots (33)$$

[Math. 34]

$$A_2 = \frac{\sqrt{P_{bs1}(0)}}{\dfrac{V_g W}{2} P_0} \quad \cdots (34)$$

[Math. 35]

$$XT_b = A_2 \frac{D_2}{D_{12}} \quad \cdots (35)$$

In Equation (34) expressed using coefficient $A_2$, similarly to Equation (23) expressed using coefficient $A_1$, the assumption is made that the loss in the transmission path between MCF 10 and light source 31 and the loss in the transmission path between MCF 10 and light receiver 33 are both zero. Thus, when these losses are taken into consideration, when the transmission loss of the transmission path through which light enters MCF 10 from light source 31 is $\alpha_{in}$, and the transmission loss of the transmission path through which light enters light receiver 33 from MCF 10 is $\alpha_{out}$, coefficient $A_2$ can be rewritten as in the following Equation (36).
[Math. 36]

$$A_2 = \frac{\sqrt{P_{bs1}(0)}}{\alpha_{in}\alpha_{out}\dfrac{V_g W}{2} P_0} \quad \cdots (36)$$

Further, when the relationship of the above-described Equation (27) is used, Equation (32) can be rewritten as the following Equation (37). In this case, when coefficient $B_2$ expressed by the following Equation (38) is used, Equation (37) can be written as the following Equation (39).
[Math. 37]

$$XT_b = S\alpha_R \sqrt{P_{bs1}(0)P_{bs1}(L)} \int_0^L P_{bs2}(z)dz \quad \cdots (37)$$

[Math. 38]

$$B_2 = \frac{S\alpha_R}{\sqrt{P_{bs1}(0)}} \quad \cdots (38)$$

[Math. 39]

$$XT_b = B_2 \frac{D_2}{D_{12}} \quad \cdots (39)$$

In this way, $XT_b$ in Equation (35) or Equation (39) can be obtained by multiplying the ratio $D_2/D_{12}$ by coefficient $A_2$ in Equation (36) or coefficient $B_2$ in Equation (38). That is, both of the term obtained by multiplying the ratio $D_2/D_{12}$ by coefficient $A_2$ and the term obtained by multiplying the ratio $D_2/D_{12}$ by coefficient $B_2$ can be used as the term representing $XT_b$.

As described above, the backscattering XT can be obtained by any one of the above-described Equation (24), Equation (29), Equation (35), and Equation (39). As described above, loss values $D_{11}$ and $D_{12}$ can be obtained using the light intensity $P_{bs1}(z)$ of first backscattered light $L_1$, and light intensity integral value $D_2$ can be obtained using the light intensity $P_{bs2}(z)$ of second backscattered light $L_2$. Coefficient $A_1$, coefficient $B_1$, coefficient $A_2$, and coefficient $B_2$ can be set as constants determined according to the setting of light source 31, the characteristics of MCF 10, and the like. Thus, the backscattering XT can be obtained by measuring the light intensity $P_{bs2}(z)$ of first backscattered light $L_1$ and the light intensity $P_{bs2}(z)$ of second backscattered light $L_2$. Light intensity integral value $D_2$ included in any of Equation (24), Equation (29), Equation (35) and Equation (39) is an integral value of the light intensity $P_{bs2}(z)$ corresponding to each position from incidence end 10a to emission end 10b of MCF 10, and thus, even when any of the equations is used, the backscattering XT is calculated as a value including all the light intensity $P_{bs2}(z)$ at each position in the longitudinal direction of MCF 10. As a result, even when the power coupling coefficient between first core 11 and second core 12 has position dependency, the backscattering XT can be accurately calculated and evaluated. However, Equation (19) used to obtain $XT_b$ in Equation (24) or Equation (29) is an equation obtained under the assumption that the transmission loss coefficient $\alpha$ is constant regardless of the position in the longitudinal direction of MCF 10, and loss value $D_{11}$ in Equation (19) represents the transmission loss of MCF 10 obtained under this condition. On the other hand, since the above-described assumption is not made in Equation (33) used to obtain $XT_b$ in Equation (35) or Equation (39), loss value $D_{12}$ in Equation (33) can accurately represent the transmission loss of MCF 10 even when the transmission loss coefficient $\alpha$ changes according to the position in the longitudinal direction of MCF 10. Thus, when the position dependency of the transmission loss coefficient $\alpha$ is taken into consideration, loss value $D_{12}$ of Equation (33) can represent the transmission loss of MCF 10 more accurately than loss value $D_{11}$ of Equation (19).

In the above description, the case where the backscattering XT corresponding to a total length L of MCF 10 from incidence end 10a to emission end 10b is calculated has been described. However, it is also possible to calculate the backscattering XT corresponding to the length of MCF 10 at any measurement position from incidence end 10a. For example, when the measurement position is $z_L$, the length of MCF 10 from incidence end 10a to the measurement position can be expressed as $z_L$, and thus the above-described Equation (24), Equation (29), Equation (35), and Equation (39) can be rewritten as the following Equation (40), Equation (41), Equation (42), and Equation (43), respectively. The backscattering XT at any measurement position $z_L$ of MCF 10 can be calculated by Equation (40), Equation (41), Equation (42), and Equation (43).

[Math. 40]

$$XT_b = \frac{1}{\frac{V_g W}{2} P_0} \frac{\int_0^{z_L} P_{bs2}(z)dz}{\exp(-\alpha z_L)} \quad \cdots (40)$$

[Math. 41]

$$XT_b = \frac{S\alpha_R}{P_{bs1}(0)} \frac{\int_0^{z_L} P_{bs2}(z)dz}{\exp(-\alpha z_L)} \quad \cdots (41)$$

[Math. 42]

$$XT_b = \frac{1}{\dfrac{V_g W}{2} P_0} \sqrt{\frac{P_{bs1}(0)}{P_{bs1}(z_L)}} \int_0^{z_L} P_{bs2}(z)dz \quad \cdots (42)$$

[Math. 43]

$$XT_b = S\alpha_R \sqrt{P_{bs1}(0)P_{bs1}(z_L)} \int_0^{z_L} P_{bs2}(z)dz \quad \cdots (43)$$

The method of deriving the backscattering XT using the OTDR device has been described in detail above. It is also possible to derive the parallel XT using the OTDR device. When the parallel XT is represented by $XT_f$, $XT_f$ can be represented as the following Equation (44) using the light intensity $P_{bs1}(L)$ at emission end 10b (position $z = L$) of first core 11 and the light intensity $P_{bs2}(L)$ at emission end 10b (position $z = L$) of second core 12. A specific method for deriving $XT_f$ is described in, for example, non-patent literature 2.

[Math. 44]

$$XT_f = \frac{1}{2} \frac{P_{bs1}(L)}{P_{bs1}(L)} \quad \cdots (44)$$

Based on the method of deriving the backscattering XT described above, the flow of processing by arithmetic processor 53 will be described with reference to FIG. 3. As shown in FIG. 3, arithmetic processor 53 includes, for example, a loss value calculator 53a, an integral value calculator 53b, and an XT calculator 53c as functional components. Loss value calculator 53a receives first time series data $D_{T1}$ from data processor 51, and calculates loss value $D_{11}$ or $D_{12}$ from first time series data $D_{T1}$ by using the above-described Equation (19) or Equation (33). Loss value calculator 53a outputs a loss value data $D_{10}$ indicating loss value $D_{11}$ or $D_{12}$ to XT calculator 53c. On the other hand, integral value calculator 53b receives second time series data $D_{T2}$ from data processor 51, and calculates light intensity integral value $D_2$ from second time series data $D_{T2}$ by using the above-described Equation (18). Integral value calculator 53b outputs an integral value data $D_{20}$ indicating light intensity integral value $D_2$ to XT calculator 53c.

XT calculator 53c calculates the backscattering XT using loss value data $D_{10}$ and integral value data $D_{20}$ output respectively from loss value calculator 53a and integral value calculator 53b. For example, when loss value data $D_{10}$ indicates loss value $D_{11}$, XT calculator 53c calculates the ratio $D_2/D_{11}$ (see Equation (20)) of light intensity integral value $D_2$ to loss value $D_{11}$. Then, XT calculator 53c multiplies the ratio $D_2/D_{11}$ by coefficient $A_1$ or coefficient $B_1$ to calculate $XT_b$ expressed by Equation (24) or Equation (29).

When loss value data $D_{10}$ indicates loss value $D_{12}$, XT calculator 53c calculates the ratio $D_2/D_{12}$ of light intensity integral value $D_2$ to loss value $D_{12}$. Then, XT calculator 53c multiplies the ratio $D_2/D_{12}$ by coefficient $A_2$ or coefficient $B_2$ to calculate $XT_b$ expressed by Equation (35) or Equation (39). XT calculator 53c outputs a calculation result $D_{30}$ including the calculated $XT_b$ to result display unit 55. Calculation result $D_{30}$ may include various parameters such as a power coupling coefficient and a position of MCF 10 in the longitudinal direction in addition to $XT_b$.

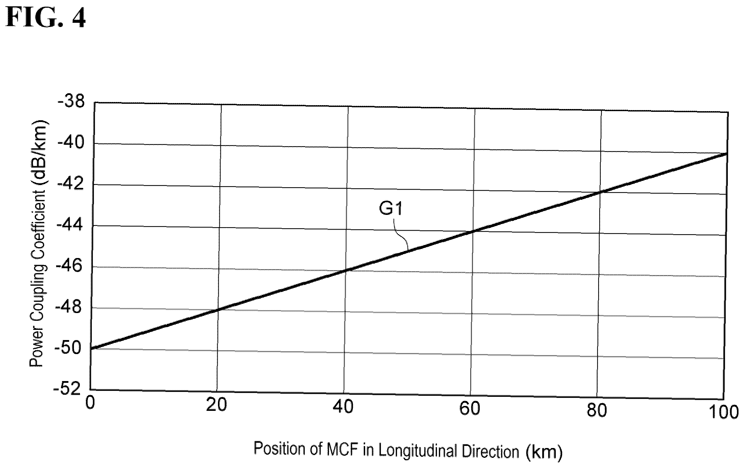

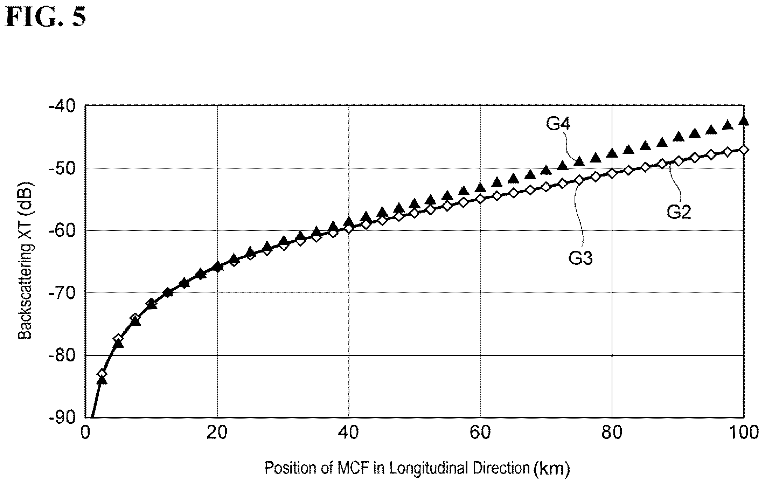

Next, the backscattering XT calculated by XT calculator 53c will be verified with reference to FIGS. 4 and 5. FIG. 4 is a graph showing the relationship between the position in the longitudinal direction of MCF 10 and the power coupling coefficient between first core 11 and second core 12. In FIG. 5, the horizontal axis represents the position (km) in the longitudinal direction of MCF 10, and the vertical axis represents the power coupling coefficient (dB/km). A graph G1 shows the change in the power coupling coefficient when there is a dependence on the position of MCF 10.

FIG. 5 is a graph showing the relationship between the position of MCF 10 in the longitudinal direction and the backscattering XT. In FIG. 5, the horizontal axis represents the position (km) in the longitudinal direction of MCF 10, and the vertical axis represents the backscattering XT (dB). A graph G2 shows a theoretical line obtained by a theoretical equation of backscattering XT (specifically, an equation obtained by replacing "hL" in formula (15) with "$\int_0^L hdz$") when there is a dependency on the position of MCF10. A graph G3 shows the position dependency of the backscattering XT calculated using the method according to the embodiment. A graph G4 shows the position dependency of the backscattering XT calculated using the method described in non-patent literature 2 as a comparative example.

In the method described in non-patent literature 2, as described above, the backscattering XT is calculated under the assumption that the power coupling coefficient has no position dependency. Thus, when the power coupling coefficient has position dependency as in the graph G1 of FIG. 4, the backscattering XT (graph G4) calculated by using the method described in non-patent literature 2 deviates from the theoretical line (graph G2) as shown in FIG. 5. In contrast, in the method according to the embodiment, as described above, since the backscattering XT is calculated using all light intensity $P_{bs2}(z)$ at each position in the longitudinal direction of MCF 10, the backscattering XT calculated using the method according to the embodiment (graph G3) has a value in which the position dependency of the power coupling coefficient is considered, and matches the theoretical line (graph G2). As described above, according to the embodiment, it is understood that the backscattering XT can be accurately obtained even when the power coupling coefficient has the position dependency.

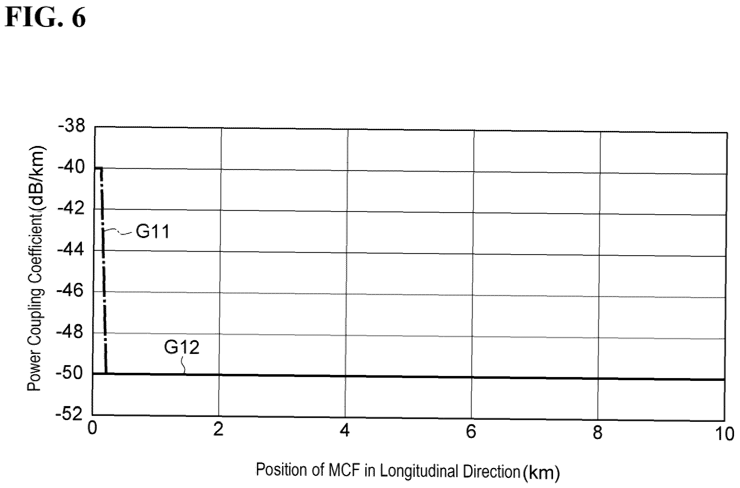

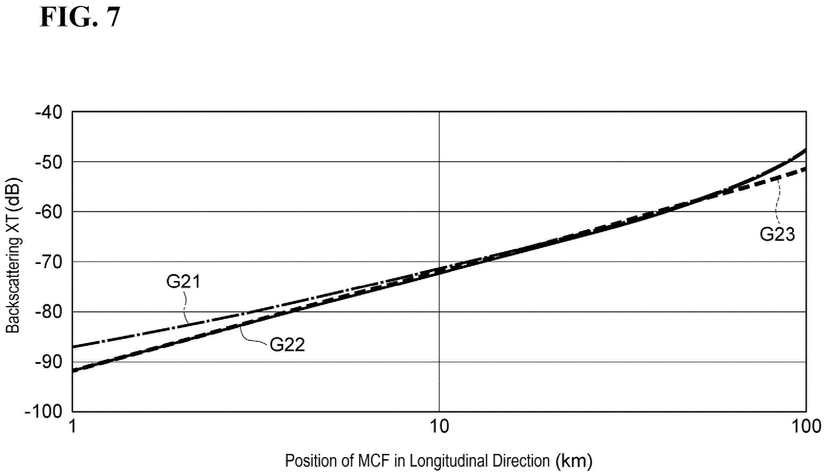

The calculated backscattering XT is further verified with reference to FIGS. 6 and 7. FIG. 6 is a graph showing the relationship between the position in the longitudinal direction of MCF 10 and the power coupling coefficient between first core 11 and second core 12, as in FIG. 4. FIG. 6 shows a graph G11 showing the power coupling coefficient when there is dependency on the position of MCF 10, and a graph G12 showing the power coupling coefficient when there is dependency on position of MCF 10. In the graph G11, the power coupling coefficient increases significantly near the position of MCF 10 at zero (that is, near incidence end 10a) and then becomes a fixed value. For example, when XT is large in FIFO (Fan-in/Fan-out) devices which are optical devices used for connection between MCF 10 and light source 31 and connection between MCF 10 and light receiver 33, a power coupling coefficient as shown in the graph G11 is obtained.

FIG. 7 is a graph showing the relationship between the position in the longitudinal direction of MCF 10 and the backscattering XT, as in FIG. 5. However, unlike FIG. 5, FIG. 7 is shown as a log-log graph. Thus, both the vertical axis and the horizontal axis of FIG. 7 are logarithmic axes. A graph G21 shows the backscattering XT calculated by the method according to the embodiment when the power coupling coefficient has a position dependency (in the case of the graph G11 in FIG. 6). A graph G22 shows the backscattering XT calculated by the method according to the embodiment when the power coupling coefficient has no position dependency (in the case of the graph G12 in FIG. 6). In the graph G22, the slope of the change in the backscattering XT is 20 (dB/decade) in a portion where the position of MCF 10 is close to zero (to be specific, in a portion where $\alpha z \ll 1$ is satisfied, where z is the position of MCF 10 and $\alpha$ is the transmission loss coefficient of MCF 10). A graph G23 shows a line where the slope of the change in the backscattering XT is 20 (dB/decade).

As shown in the graph G21 of FIG. 7, it is understood that the slope of the change in the backscattering XT when the power coupling coefficient has the position dependency does not coincide with 20 (dB/decade) which is the slope of the change in the backscattering XT when the power coupling coefficient does not have the position dependency. This shows that the backscattering XT varies between the case where the power coupling coefficient has position dependency and the case where the power coupling coefficient does not have position dependency. When the backscattering XT is displayed by the log-log graph as shown in FIG. 7, the portion represented by the curve in FIG. 5 (i.e., the portion where the position of MCF 10 is close to zero) can be displayed by a straight line, and thus, the backscattering XT in the portion can be easily evaluated. In the method described in non-patent literature 2, even when the power coupling coefficient has the position dependency, the backscattering XT having the slope of 20 (dB/decade) is obtained as in the graph G22.

Result display unit 55 displays data presenting the relationship between the position in the longitudinal direction of MCF 10 and the backscattering XT using calculation result $D_{30}$ output from XT calculator 53c. For example, result display unit 55 may display one of the graphs of FIGS. 5 and 7, or may display both of the graphs of FIGS. 5 and 7. Result display unit 55 may display the graph of FIG. 4 together with the graph of FIG. 5, or may display the graph of FIG. 6 together with the graph of FIG. 7. Thus, the position dependency, etc. of the backscattering XT can be evaluated by using the graphs displayed on result display unit 55.

[Optical Characteristic Measuring Method]

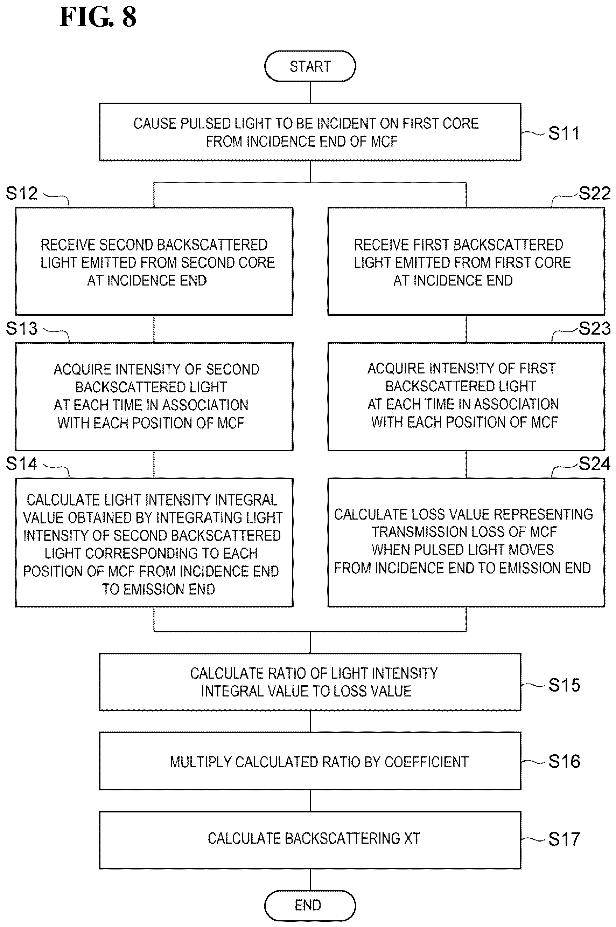

Next, an optical characteristic measuring method using optical characteristic measuring system 1 will be described with reference to FIG. 8. FIG. 8 is a flowchart showing an example of the optical characteristic measuring method.

First, light source 31 causes pulsed light $L_p$ to be incident on first core 11 from incidence end 10a of MCF 10 (step S11). Next, light receiver 33 receives second backscattered light $L_2$ emitted from second core 12 at incidence end 10a as a result of the incidence of pulsed light $L_p$ on first core 11 (step S12). When light receiver 33 receives second backscattered light $L_2$, data processor 51 of arithmetic device 50 acquires the intensity of second backscattered light $L_2$ at each time when light receiver 33 receives second backscattered light $L_2$, in association with each position from incidence end 10a to emission end 10b in the longitudinal direction of MCF 10 (step S13). Then, integral value calculator 53b of arithmetic device 50 calculates light intensity integral value $D_2$ obtained by integrating the light intensity of second backscattered light $L_2$

corresponding to each position of MCF 10 from incidence end 10a to emission end 10b (step S14).

After step S11, light receiver 33 receives first backscattered light $L_1$ emitted from first core 11 at incidence end 10a as a result of the incidence of pulsed light $L_p$ on first core 11 (step S22). When light receiver 33 receives first backscattered light $L_1$, data processor 51 of arithmetic device 50 acquires the intensity of first backscattered light $L_1$ at each time when light receiver 33 receives first backscattered light $L_1$, in association with each position from incidence end 10a to emission end 10b in the longitudinal direction of MCF 10 (step S23). Then, loss value calculator 53a of arithmetic device 50 calculates loss value $D_{11}$ or $D_{12}$ representing the transmission loss of MCF 10 when pulsed light $L_p$ moves from incidence end 10a to emission end 10b (step S24).

Next, XT calculator 53c of arithmetic device 50 calculates the ratio of light intensity integral value $D_2$ to loss value $D_{11}$ or $D_{12}$ (step S15). Next, XT calculator 53c multiplies the calculated ratio by the coefficient (step S16), thereby calculating the backscattering XT (step S17). Specifically, when the ratio $D_2/D_{11}$ is calculated, XT calculator 53c calculates $XT_b$ expressed by Equation (24) or Equation (29) by multiplying the ratio $D_2/D_{11}$ by coefficient $A_1$ or $B_1$. When the ratio $D_2/D_{12}$ is calculated, XT calculator 53c calculates $XT_b$ expressed by Equation (35) or Equation (39) by multiplying the ratio $D_2/D_{12}$ by coefficient $A_2$ or $B_2$. Thereafter, result display unit 55 displays a graph presenting the calculated $XT_b$. The group of steps for calculating light intensity integral value $D_2$ (in particular, steps S22, S23, and S24) and the group of steps for calculating loss value $D_{11}$ or $D_{12}$ (in particular, steps S12, S13, and S14) may be performed simultaneously or in different times.

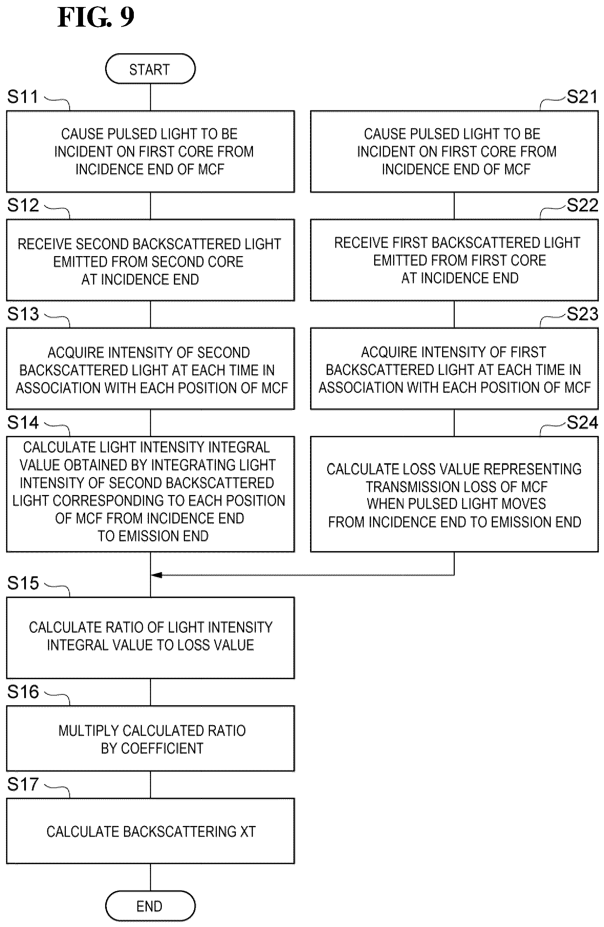

The optical characteristic measuring method of the present disclosure is not limited to the example shown in FIG. 8. FIG. 9 is a flowchart showing another example of the optical characteristic measuring method. In the example shown in FIG. 8, the measurement of first backscattered light $L_1$ from first core 11 and the measurement of second backscattered light $L_2$ from second core 12 are performed in a single common measurement, but these measurements may be performed separately. In the example shown in FIG. 9, a step S21 is provided separately from the step S11. The step S21 is a step of causing pulsed light $L_p$ to be incident on first core 11 from incidence end 10a of MCF 10, similarly to the step S11, but is performed by measurement different from that in the step S11.

For example, the step S21 may be performed before the step S11, and the series of processes from the step S11 to the step S17 may be performed after loss value $D_{11}$ or $D_{12}$ is calculated in advance by the steps S22, S23, and S24. That is, the group of steps for calculating loss value $D_{11}$ or $D_{12}$ (in particular, steps S11, S12, S13, and S14) may be performed before the group of steps for calculating light intensity integral value $D_2$ (in particular, steps S21, S22, S23, and S24). The group of steps of calculating loss value $D_{11}$ or $D_{12}$ may be performed after the group of steps of calculating light intensity integral value $D_2$.

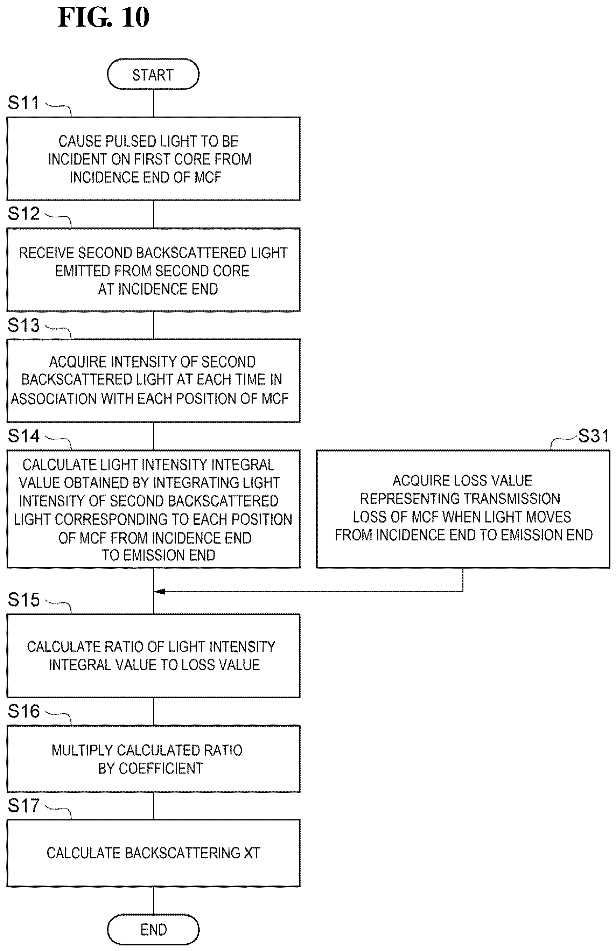

FIG. 10 is a flowchart showing another example of the optical characteristic measuring method. In the example shown in FIG. 8, the case where the light intensity of first backscattered light $L_1$ emitted from first core 11 at incidence end 10a is measured to calculate loss value $D_{11}$ or $D_{12}$ is shown. However, for example, loss value $D_{11}$ may be measured by directly measuring the light emitted from first core 11 at emission end 10b. In this case, for example, a device for measuring light emitted from first core 11 may be connected to emission end 10b of MCF 10, and loss value $D_{11}$ may be calculated by the device. The light incident on incidence end 10a of MCF 10 may be either "pulsed light" or "continuous light". The light emitted from emission end 10b as a result of the incidence on incidence end 10a is measured by the device connected to emission end 10b, and thus loss value $D_{11}$ representing the transmission loss of MCF 10 when the light (pulsed light or continuous light) moves from incidence end 10a to emission end 10b can be calculated. Then, as shown in FIG. 10, after loss value $D_{11}$ is obtained from the device (step S31), the following steps S15 through S17 may be performed. In the step S31, when the loss value at total length L of MCF 10 is measured using the device connected to emission end 10b, the loss value D can be expressed by $\exp(-\alpha L)$ (see Equation (19)), and thus the transmission loss coefficient $\alpha$ can be estimated by solving the equation $D = \exp(-\alpha L)$. Thus, by substituting the estimated transmission loss coefficient $\alpha$ into $\exp(-\alpha z_L)$, loss value $D_{11}$ at any measurement position $z_L$ in MCF 10 can also be obtained.

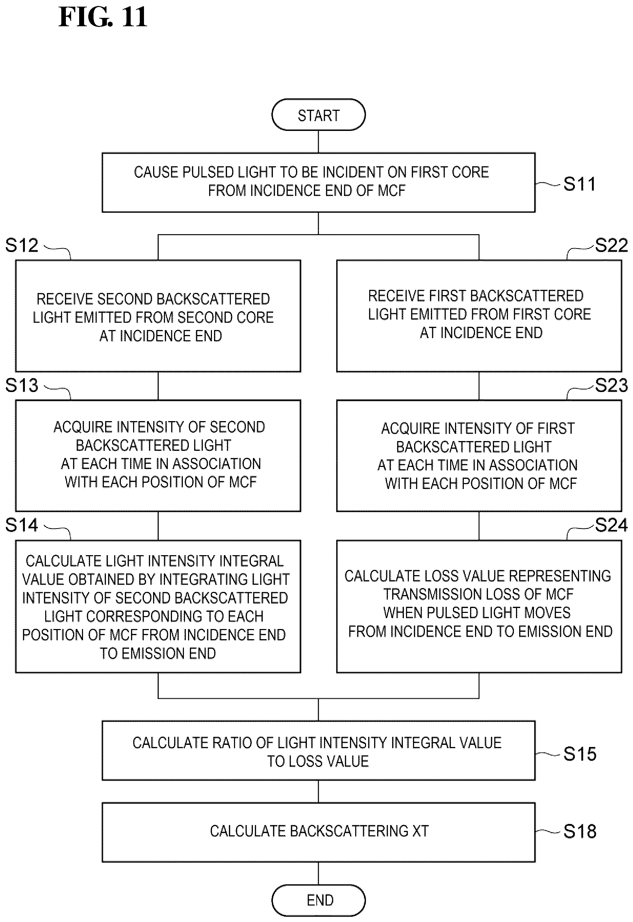

FIG. 11 is a flowchart showing another example of an optical characteristic measuring method. In the example shown in FIG. 8, the backscattering XT is directly calculated. However, the backscattering XT does not necessarily have to be calculated directly. For example, as shown in FIG. 11, after the ratio of light intensity integral value $D_2$ to loss value $D_{11}$ or $D_{12}$ is calculated (step S15), the calculation of multiplying the ratio by coefficient $A_1$, $B_1$, $A_2$, or $B_2$ may not be performed. Even if the calculation of multiplying these coefficients is not performed, the calculated ratio can be used as a value proportional to the backscattering XT.

The backscattering XT is usually expressed in dB. In contrast, if a value proportional to the backscattering XT is obtained, it is possible to understand how the position dependency of the backscattering XT in dB is expressed in arbitrary units. The parts of coefficients $A_1$, $B_1$, $A_2$ or $B_2$ by which the value proportional to the backscattering XT is multiplied are added in the addition in the graphs of FIG. 5 or FIG. 7, expressed in dB. Thus, when a value proportional to the backscattering XT is displayed in these graphs, the value proportional to the backscattering XT shows the same change as the backscattering XT in a state of being shifted upward and downward from the backscattering XT. The value proportional to the backscattering XT (i.e., the ratio of light intensity integral value $D_2$ to loss value $D_{11}$ or $D_{12}$) is a value that changes in accordance with a change in the backscattering XT, and thus can be used as a backscattering XT index representing the backscattering XT. Thus, as shown in FIG. 11, after the step S15, the calculated ratio may be used as the backscattering XT index without generating coefficients $A_1$, $B_1$, $A_2$, or $B$ in the ratio (step S18). Thus, the "backscattering XT index" of the present disclosure may not be the backscattering XT itself, but may be a value proportional to the backscattering XT (i.e., the ratio of light intensity integral value $D_2$ to loss value $D_{11}$ or $D_{12}$).

Effects obtained by optical characteristic measuring system 1 and the optical characteristic measuring method according to the embodiment described above will be described. As described above, in the method described in non-patent literature 2, backscattering XT is derived under the assumption that the power coupling coefficient between the cores used for deriving the backscattering XT is constant regardless of the position of the MCF (that is, the power coupling coefficient has no position dependency). Thus, when the power coupling coefficient has position dependency, there is a problem that the backscattering XT cannot be accurately evaluated. Thus, the present inventors have conducted intensive studies on a method for accurately evaluating backscattering XT in consideration of the position dependency of the power coupling coefficient.

The backscattering XT can be defined by a ratio of the light intensity caused by backscattering among the light that moves from first core 11 to second core 12 and returns to incidence end 10a to the light intensity that is incident on first core 11 from incidence end 10a and is emitted from emission end 10b. The present inventors have found in the course of repeated studies that the light intensity at emission end 10b can be estimated by loss value $D_{11}$ or $D_{12}$ representing the transmission loss of MCF 10 when pulsed light $L_p$ moves from incidence end 10a to emission end 10b in first core 11. Further, the present inventors have conceived that the light intensity returning to incidence end 10a in second core 12 is represented by light intensity integral value $D_2$ of second backscattered light $L_2$ corresponding to each position from incidence end 10a to emission end 10b when pulsed light $L_p$ is incident on first core 11. The present inventors have found that a term including the ratio of light intensity integral value $D_2$ to loss value $D_{11}$ or $D_{12}$ can be treated as the backscattering XT. In this way, by using light intensity integral value $D_2$, the backscattering XT can be calculated using the light intensity of all second backscattered light $L_2$ from incidence end 10a to emission end 10b. Thus, according to the embodiment, even when the power coupling coefficient has the position dependency, it is possible to accurately evaluate the backscattering XT.

As in the embodiment, arithmetic processor 53 may calculate loss value $D_{11}$ or $D_{12}$ using the light intensity of first backscattered light $L_1$ corresponding to each position of first core 11 from incidence end 10a to emission end 10b. In this case, loss value $D_{11}$ or $D_{12}$ representing the transmission loss of MCF 10 can be more accurately calculated using the light intensity of first backscattered light $L_1$ emitted from first core 11. In this way, when the light intensity of first backscattered light $L_1$ corresponding to each position of first core 11 is used, it is possible to more accurately calculate loss value $D_{11}$ or $D_{12}$ representing the transmission loss at any measurement position $z_L$ of MCF 10 using, for example, Equation (40), Equation (41), Equation (42), and Equation (43). As a result, it is possible to more accurately evaluate the backscattering XT at any measurement position $z_L$ of MCF 10 by using the term including the ratio of light intensity integral value $D_2$ to loss value $D_{11}$ or $D_{12}$. In the embodiment using the OTDR device, both of loss value $D_{11}$ of the Equation (19) and loss value $D_{12}$ of the Equation (33) can be used as the value representing the transmission loss of MCF 10. However, as described above, in consideration of the position dependency of the transmission loss coefficient $\alpha$, the transmission loss of MCF 10 can be more accurately represented by using loss value $D_{12}$ of Equation (33). That is, by using Equation (33), it is possible to obtain a more accurate loss value $D_{12}$ in consideration of the position dependency of the transmission loss coefficient $\alpha$. By calculating the backscattering XT using loss value $D_{12}$ obtained in this way, it is possible to more accurately evaluate the backscattering XT even when the transmission loss coefficient $\alpha$ has position dependency.

As in the embodiment, arithmetic processor 53 may calculate the ratio $D_2/D_{11}$ expressed by Equation (20) using loss value $D_{11}$ expressed by Equation (19) and light intensity integral value $D_2$ expressed by Equation (18). The present inventors have found that the term including the ratio $D_2/D_{11}$ expressed by Equation (20) indicates a value proportional to the backscattering XT in the course of repeated studies on a mathematical expression for calculating the backscattering XT index. By using the term including the ratio $D_2/D_{11}$, even when the power coupling coefficient between first core 11 and second core 12 has position dependency, it is possible to accurately evaluate the backscattering XT.

As in the embodiment, arithmetic processor 53 may calculate the backscattering XT by multiplying the ratio $D_2/D_{11}$ expressed by Equation (20) by coefficient $A_1$ expressed by Equation (23) or coefficient $B_1$ expressed by Equation (28). The present inventors have found that the backscattering XT can be directly calculated by multiplying the ratio $D_2/D_{11}$ expressed by Equation (20) by coefficient $A_1$ expressed by Equation (23) or coefficient $B_1$ expressed by Equation (28) in the course of repeated studies on the mathematical expression for calculating the backscattering XT. Thus, by using a value obtained by multiplying the ratio $D_2/D_{11}$ by coefficient $A_1$ or coefficient $B_1$, it is possible to directly and accurately evaluate the backscattering XT.

As in the embodiment, the ratio $D_2/D_{12}$ expressed by Equation (35) or Equation (39) may be calculated using loss value $D_{12}$ expressed by Equation (34) and light intensity integral value $D_2$ expressed by Equation (38). The present inventors have found that the term including the ratio $D_2/D_{12}$ expressed by Equation (35) or Equation (39) indicates a value proportional to the backscattering XT in the course of repeated studies on the mathematical expression for calculating the backscattering XT index. By using the term including the ratio $D_2/D_{12}$, it is possible to accurately evaluate the backscattering XT even when the power coupling coefficient between first core 11 and second core 12 has position dependency.

As in the embodiment, arithmetic processor 53 may calculate the backscattering XT by multiplying the ratio $D_2/D_{12}$ expressed by Equation (35) or Equation (39) by coefficient $A_2$ expressed by Equation (36) or coefficient $B_2$ expressed by Equation (38). The present inventors have found that the backscattering XT can be directly calculated by multiplying the ratio $D_2/D_{12}$ expressed by Equation (35) or Equation (39) by coefficient $A_2$ expressed by Equation (36) or coefficient $B_2$ expressed by Equation (38) in the course of repeated studies on the mathematical expression for calculating the backscattering XT. Thus, by using a value obtained by multiplying the ratio $D_2/D_{12}$ by coefficient $A_2$ or coefficient $B_2$, it is possible to directly and accurately evaluate the backscattering XT.

As in the embodiment, optical characteristic measuring system 1 may include optical system 39 that guides pulsed light $L_p$ from light source 31 to first core 11, and guides first backscattered light $L_1$ from first core 11 and second backscattered light $L_2$ from second core 12 to light receiver 33. In this case, it is possible to easily achieve a configuration in which pulsed light $L_p$ is incident on first core 11, and first backscattered light $L_1$ and second backscattered light $L_2$ respectively emitted from first core 11 and second core 12 are received by light receiver 33.

As in the embodiment, optical characteristic measuring system 1 may include result display unit 55 that displays a log-log graph presenting a relationship between the position along the longitudinal direction of MCF 10 and the backscattering XT. By using the log-log graph in this way, it is possible to easily capture a change in the backscattering XT with respect to the position of MCF 10. This makes it possible to easily evaluate the position dependency, etc. of the backscattering XT.

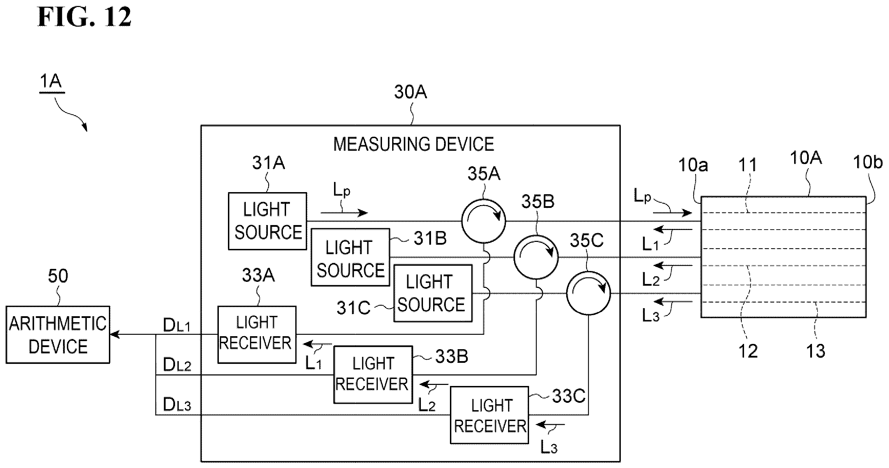

The present disclosure is not limited to the above-described embodiments, and can be appropriately modified without departing from the scope of the claims. FIG. 12 shows optical characteristic measuring system 1 according to a modification. An optical characteristic measuring system 1A shown in FIG. 12 includes, for example, a plurality of light sources 31A, 31B, and 31C, a plurality of light receivers 33A, 33B, and 33C, and a plurality of circulators 35A, 35B, and 35C. An MCF 10A includes a third core 13 in addition to first core 11 and second core 12. In the example shown in FIG. 12, three light sources 31A, 31B, and 31C, three light receivers 33A, 33B, and 33C, and three circulators 35A, 35B, and 35C are provided in correspondence with the number of cores of MCF 10A.

Light source 31A and light receiver 33A are optically coupled to first core 11 via circulator 35A. Specifically, light source 31A is connected to an input port of circulator 35A, and light receiver 33A is connected to an output port of circulator 35A. The input/output port of circulator 35A is connected to first core 11 at incidence end 10a. Pulsed light $L_p$ output from light source 31A is incident on first core 11 at incidence end 10a, and first backscattered light $L_1$ emitted from first core 11 at incidence end 10a is received by light receiver 33A.

Light source 31B and light receiver 33B are optically coupled to second core 12 via circulator 35B. Specifically, light source 31B is connected to an input port of circulator 35B, and light receiver 33B is connected to an output port of circulator 35B. The input/output port of circulator 35B is connected to second core 12 at incidence end 10a. The pulsed light output from light source 31B can be incident on second core 12 at incidence end 10a. Second backscattered light $L_2$ emitted from second core 12 at incidence end 10a is received by light receiver 33B.

Light source 31C and light receiver 33C are optically coupled to third core 13 via circulator 35C. Specifically, light source 31C is connected to an input port of circulator 35C, and light receiver 33C is connected to an output port of circulator 35C. The input/output port of circulator 35C is connected to third core 13 at incidence end 10a. The pulsed light output from light source 31C can be incident on third core 13 at incidence end 10a. A third backscattered light $L_3$ emitted from third core 13 at incidence end 10a is received by light receiver 33C.

FIG. 12 shows a case where pulsed light $L_p$ is incident on first core 11 at incidence end 10a from light source 31A, and first backscattered light $L_1$, second backscattered light $L_2$, and third backscattered light are respectively emitted from first core 11, second core 12, and third core 13 at incidence end 10a, as a result of the incidence of pulsed light $L_p$ on first core 11. In this case, light receiver 33A measures the light intensity of first backscattered light $L_1$ at a predetermined sampling period, and transmits the measured light intensity of first backscattered light $L_1$ to arithmetic device 50 as first light intensity data $D_{L1}$. Light receiver 33B measures the light intensity of second backscattered light $L_2$ at a predetermined sampling period, and transmits the measured light intensity of second backscattered light $L_2$ to arithmetic device 50 as second light intensity data $D_{L2}$. Light receiver 33C measures the light intensity of third backscattered light $L_3$ at a predetermined sampling period, and transmits the measured light intensity of third backscattered light $L_3$ to arithmetic device 50 as a third light intensity data $D_{L3}$.

Arithmetic device 50 calculates the backscattering XT between first core 11 and second core 12 and the backscattering XT between first core 11 and third core 13 by the same method as the above-described embodiment using first light intensity data $D_{L1}$, second light intensity data $D_{L2}$, and third light intensity data $D_{L3}$. When pulsed light $L_p$ is incident on second core 12 from light source 31B or pulsed light $L_p$ is incident on third core 13 from light source 31C, the backscattering XT between second core 12 and third core 13 can also be calculated.

In this way, the backscattering XT between any cores of first core 11, second core 12, and third core 13 can be calculated by the same method as that of the above-described embodiment. Thus, even optical characteristic measuring system 1A shown in FIG. 12 can obtain the same effect as the above-described embodiment. Further, according to optical characteristic measuring system 1A including the plurality of light sources 31A, 31B, and 31C and the plurality of light receivers 33A, 33B, and 33C, even when backscattering XT is measured for a combination other than first core 11 and second core 12, backscattering XT between any cores of MCF 10A can be easily calculated without changing the connection between light source 31 and MCF 10A and changing the connection between light receiver 33 and MCF 10A.

The number of light sources and the number of light receivers included in the measuring device are not limited to the above-described embodiment and modification, and can be appropriately changed. For example, the measuring device may include one light source and a plurality of light receivers, or may include a plurality of light sources and one light receiver. In the above-described embodiment, the pulsed light is incident on the first core. However, even when pulsed light is incident on the second core, the backscattering XT can be calculated by the same derivation method as that in the above-described embodiment. In the above-described embodiment and modification, the case where the MCF includes the first core and the second core and the case where the MCF includes the first core, the second core, and the third core have been described. However, even when the MCF includes four or more cores, one of the cores is regarded as a "first core" and another core is regarded as a "second core", and thus the same derivation method as that in the above-described embodiment can be applied.

REFERENCE SIGNS LIST

1, 1A optical characteristic measuring system
10, 10A multi-core optical fiber (MCF)
10a incidence end
10b emission end
11 first core
12 second core
13 third core
30 measuring device
31, 31A, 31B, 31C light source
33, 33A, 33B, 33C light receiver
35, 35A, 35B, 35C circulator
37 switch
39 optical system
50 arithmetic device
51 data processor
53 arithmetic processor
53a loss value calculator
53b integral value calculator
53c XT calculator
55 result display unit (example of "display unit")
$A_1$, $A_2$, $B_1$, $B_2$ coefficient
$D_{11}$, $D_{12}$ loss value
$D_2$ light intensity integral value (example of "integral value")
$D_{10}$ loss value data
$D_{20}$ integral value data
$D_{30}$ calculation result
$D_{11}$ first light intensity data
$D_{L2}$ second light intensity data
$D_{13}$ third light intensity data
$D_{T1}$ first time series data
$D_{T2}$ second time series data
L total length
$L_1$ first backscattered light
$L_2$ second backscattered light
$L_3$ third backscattered light
$L_{cw}$ continuous light
$L_p$ pulsed light

The above Equations (1) to (44) are established in an arbitrary unit system. The characters (variables) such as physical quantities used in the above equations have the following dimensions in the MKS unit system. The scattering cross-sectional area S and loss value D11 of the multi-core optical fiber are dimensionless quantities.

Measurement position $z_L$ [m]
Transmission loss coefficient $\alpha$ of multi-core optical fiber [/m]
Transmission loss coefficient $\alpha_R$ [/m]
Group velocity $V_g$ of pulsed light [m/s]
Pulse width W of pulsed light [s]
Light intensity $P_0$ of pulsed light [W]
Light intensity $P_{bs1}(0)$ of first backscattered light corresponding to one end [W]
Light intensity $P_{bs1}$ of first backscattered light [W]
Light intensity $P_{bs2}$ of second backscattered light [W]
Integral value $D_2$ [W·m]
Transmission loss $D_{12}$ [$W^{1/2}$]
Coefficient $A_1$ [/(W·m)]
Coefficient $B_1$ [/(W·m)]
Coefficient $A_2$ [/($W^{1/2}$·m)]
Coefficient $B_2$ [/($W^{1/2}$·m)]

**Claims**

1. An optical characteristic measuring system configured to measure an optical characteristic of a multi-core optical fiber including at least a first core and a second core, the system comprising:

   at least one light source optically coupled to the first core and being capable of causing pulsed light to be incident on the first core from one end of the multi-core optical fiber;
   at least one light receiver optically coupled to at least the second core and being capable of receiving, among first backscattered light and second backscattered light respectively emitted from the first core and the second core at the one end as a result of the incidence of the pulsed light on the first core, at least the second backscattered light; and
   an arithmetic device communicably connected to the light receiver and configured to, based on a light intensity of at least the second backscattered light, calculate a backscattering crosstalk index representing backscattering crosstalk related to a light intensity of the second backscattered light that moves from the first core to the second core and returns to the one end as part of the pulsed light,
   wherein the arithmetic device includes

   a data processor configured to acquire a light intensity of the second backscattered light at each time when the light receiver receives the second backscattered light, in association with each position from the one end to any measurement position in a longitudinal direction of the multi-core optical fiber, and
   an arithmetic processor configured to calculate, as the backscattering crosstalk index, a term including a ratio of an integral value obtained by integrating the light intensity of the second backscattered light corresponding to each position of the second core from the one end to the measurement position to a loss value representing a transmission loss of the multi-core optical fiber when light moves in the first core from the one end to the measurement position.

2. The optical characteristic measuring system according to claim 1,

   wherein the light receiver is optically coupled to the first core and is capable of receiving the first backscattered light emitted from the first core at the one end,
   wherein the data processor acquires a light intensity of the first backscattered light at each time when the light receiver receives the first backscattered light, in association with each position from the one end to the measurement position, and
   wherein the arithmetic processor calculates the loss value representing the transmission loss of the multi-core optical fiber when the pulsed light moves in the first core from the one end to the measurement position, using the light intensity of the first backscattered light corresponding to each position of the first core from the one end to the measurement position.

3. The optical characteristic measuring system according to claim 1 or 2,

   wherein the arithmetic processor calculates the ratio expressed by Equation (3) below using the loss value expressed by Equation (1) below and the integral value expressed by Equation (2) below, when $D_{11}$ denotes the loss value and $D_2$ [W·m] denotes the integral value,

   [Math. 1]

$$D_{11} = \exp(-\alpha z_{\mathrm{L}}) \quad \cdots (1)$$

   [Math. 2]

$$D_2 = \int_0^{z_{\mathrm{L}}} P_{\mathrm{bs2}}(z)dz \quad \cdots (2)$$

   [Math. 3]

$$\frac{D_2}{D_{11}} = \frac{\int_0^{z_{\mathrm{L}}} P_{\mathrm{bs2}}(z)dz}{\exp(-\alpha z_{\mathrm{L}})} \quad \cdots (3)$$

   where z [m] denotes a position in the longitudinal direction of the multi-core optical fiber when the one end is set as an origin, $P_{\mathrm{bs2}}(z)$ [W] denotes a light intensity of the second backscattered light corresponding to the position z [m], $z_{\mathrm{L}}$ [m] denotes the measurement position, and $\alpha$ [/m] denotes a transmission loss coefficient of the multi-core optical fiber.

4. The optical characteristic measuring system according to claim 3,

   wherein the arithmetic processor calculates the backscattering crosstalk index by multiplying the ratio expressed by Equation (3) by a coefficient $A_1$ [/(W·m)] expressed by Equation (4) below or a coefficient $B_1$ [/(W·m)] expressed by Equation (5) below,

   [Math. 4]

$$A_1 = \frac{1}{\dfrac{V_g W}{2} P_0} \quad \cdots (4)$$

   [Math. 5]

$$B_1 = \frac{S \alpha_{\mathrm{R}}}{P_{\mathrm{bs1}}(0)} \quad \cdots (5)$$

   where $P_{\mathrm{bs1}}(0)$ [W] denotes a light intensity of the first backscattered light corresponding to the one end, $P_0$ [W] denotes a light intensity of the pulsed light, $V_g$ [m/s] denotes a group velocity of the pulsed light when moving through the multi-core optical fiber, W [s] denotes a pulse width of the pulsed light, S denotes a scattering cross-sectional area of the multi-core optical fiber, and $\alpha_{\mathrm{R}}$ [/m] denotes a transmission loss coefficient due to Rayleigh scattering of the multi-core optical fiber.

5. The optical characteristic measuring system according to claim 2,

   wherein the arithmetic processor calculates the ratio expressed by Equation (8) below using the loss value expressed by Equation (6) below and the integral value expressed by Equation (7) below, when $D_{12}$ [$W^{1/2}$] denotes the transmission loss and $D_2$ [W·m] denotes the integral value,

[Math. 6]

$$D_{12} = \sqrt{P_{\mathrm{bs}1}(z_{\mathrm{L}})} \quad \cdots (6)$$

[Math. 7]

$$D_2 = \int_0^{z_{\mathrm{L}}} P_{\mathrm{bs}2}(z)dz \quad \cdots (7)$$

[Math. 8]

$$\frac{D_2}{D_{12}} = \frac{\int_0^{z_{\mathrm{L}}} P_{\mathrm{bs}2}(z)dz}{\sqrt{P_{\mathrm{bs}1}(z_{\mathrm{L}})}} \quad \cdots (8)$$

where z [m] denotes a position in the longitudinal direction of the multi-core optical fiber when the one end is set as an origin, $P_{\mathrm{bs}1}(z)$ [W] denotes a light intensity of the first backscattered light corresponding to the position z [m], $P_{\mathrm{bs}2}(z)$ [W] denotes a light intensity of the second backscattered light corresponding to the position z [m], and $z_{\mathrm{L}}$ [m] denotes the measurement position.

6. The optical characteristic measuring system according to claim 5,

   wherein the arithmetic processor calculates the backscattering crosstalk index by multiplying the ratio expressed by Equation (8) by a coefficient $A_2$ [/(W$^{1/2}$·m)] expressed by Equation (9) below or a coefficient $B_2$ [/(W$^{1/2}$·m)] expressed by Equation (10) below,
   [Math. 9]

$$A_2 = \frac{2\sqrt{P_{\mathrm{bs}1}(0)}}{P_0 V_{\mathrm{g}} W} \quad \cdots (9)$$

   [Math. 10]

$$B_2 = \frac{S\alpha_{\mathrm{R}}}{\sqrt{P_{\mathrm{bs}1}(0)}} \quad \cdots (10)$$

   where $P_{\mathrm{bs}1}(0)$ [W] denotes a light intensity of the first backscattered light corresponding to the one end, $P_0$ [W] denotes a light intensity of the pulsed light, $V_{\mathrm{g}}$ [m/s] denotes a group velocity of the pulsed light when moving through the multi-core optical fiber, W [s] denotes a pulse width of the pulsed light, S denotes a scattering cross-sectional area of the multi-core optical fiber, and $\alpha_{\mathrm{R}}$ [/m] denotes a transmission loss coefficient due to Rayleigh scattering of the multi-core optical fiber.

7. The optical characteristic measuring system according to any one of claims 2 to 6, further comprising an optical system configured to guide the pulsed light from the light source to the first core, and guide the first backscattered light from the first core and the second backscattered light from the second core to the light receiver.

8. The optical characteristic measuring system according to any one of claims 1 to 7, further comprising a display unit configured to display a log-log graph presenting a relationship between a position in the longitudinal direction of the multi-core optical fiber and the backscattering crosstalk index.

9. An optical characteristic measuring method using an optical characteristic measuring system configured to measure an optical characteristic of a multi-core optical fiber including at least a first core and a second core, the method comprising:

causing pulsed light to be incident on the first core from one end of the multi-core optical fiber;
receiving with a light receiver, among first backscattered light and second backscattered light respectively emitted from the first core and the second core at the one end as a result of the incidence of the pulsed light on the first core, at least the second backscattered light; and
calculating, based on a light intensity of at least the second backscattered light, a backscattering crosstalk index representing backscattering crosstalk related to a light intensity of the second backscattered light that moves from the first core to the second core and returns to the one end as part of the pulsed light,
wherein the calculating the backscattering crosstalk index includes

acquiring a light intensity of the second backscattered light at each time when the light receiver receives the second backscattered light, in association with each position from the one end to any measurement position in a longitudinal direction of the multi-core optical fiber, and
calculating, as the backscattering crosstalk index, a term including a ratio of an integral value obtained by integrating the light intensity of the second backscattered light corresponding to each position of the second core from the one end to the measurement position to a loss value representing a transmission loss of the multi-core optical fiber when light moves in the first core from the one end to the measurement position.

# FIG. 1

FIG. 2

EP 4 585 894 A1

# FIG. 3

# FIG. 4

Position of MCF in Longitudinal Direction (km)

EP 4 585 894 A1

FIG. 5

FIG. 6

EP 4 585 894 A1

## FIG. 7

# FIG. 8

START

CAUSE PULSED LIGHT TO BE INCIDENT ON FIRST CORE
FROM INCIDENCE END OF MCF — S11

S12 — RECEIVE SECOND BACKSCATTERED
LIGHT EMITTED FROM SECOND CORE
AT INCIDENCE END

S22 — RECEIVE FIRST BACKSCATTERED
LIGHT EMITTED FROM FIRST CORE
AT INCIDENCE END

S13 — ACQUIRE INTENSITY OF SECOND
BACKSCATTERED LIGHT
AT EACH TIME IN ASSOCIATION
WITH EACH POSITION OF MCF

S23 — ACQUIRE INTENSITY OF FIRST
BACKSCATTERED LIGHT
AT EACH TIME IN ASSOCIATION
WITH EACH POSITION OF MCF

S14 — CALCULATE LIGHT INTENSITY INTEGRAL
VALUE OBTAINED BY INTEGRATING LIGHT
INTENSITY OF SECOND BACKSCATTERED
LIGHT CORRESPONDING TO EACH
POSITION OF MCF FROM INCIDENCE END
TO EMISSION END

S24 — CALCULATE LOSS VALUE REPRESENTING
TRANSMISSION LOSS OF MCF
WHEN PULSED LIGHT MOVES
FROM INCIDENCE END TO EMISSION END

CALCULATE RATIO OF LIGHT INTENSITY
INTEGRAL VALUE TO LOSS VALUE — S15

MULTIPLY CALCULATED RATIO BY COEFFICIENT — S16

CALCULATE BACKSCATTERING XT — S17

END

# FIG. 9

```
                    ┌─────────┐
                    │  START  │
                    └─────────┘
```

S11

CAUSE PULSED LIGHT TO BE
INCIDENT ON FIRST CORE FROM
INCIDENCE END OF MCF

S12

RECEIVE SECOND BACKSCATTERED LIGHT
EMITTED FROM SECOND CORE
AT INCIDENCE END

S13

ACQUIRE INTENSITY OF SECOND
BACKSCATTERED LIGHT AT EACH TIME IN
ASSOCIATION WITH EACH POSITION OF MCF

S14

CALCULATE LIGHT INTENSITY INTEGRAL
VALUE OBTAINED BY INTEGRATING LIGHT
INTENSITY OF SECOND BACKSCATTERED
LIGHT CORRESPONDING TO EACH POSITION
OF MCF FROM INCIDENCE END
TO EMISSION END

S21

CAUSE PULSED LIGHT TO BE
INCIDENT ON FIRST CORE FROM
INCIDENCE END OF MCF

S22

RECEIVE FIRST BACKSCATTERED LIGHT
EMITTED FROM FIRST CORE
AT INCIDENCE END

S23

ACQUIRE INTENSITY OF FIRST
BACKSCATTERED LIGHT AT EACH TIME IN
ASSOCIATION WITH EACH POSITION OF MCF

S24

CALCULATE LOSS VALUE REPRESENTING
TRANSMISSION LOSS OF MCF
WHEN PULSED LIGHT MOVES
FROM INCIDENCE END TO EMISSION END

S15

CALCULATE RATIO OF LIGHT INTENSITY
INTEGRAL VALUE TO LOSS VALUE

S16

MULTIPLY CALCULATED RATIO
BY COEFFICIENT

S17

CALCULATE BACKSCATTERING XT

```
                    ┌─────────┐
                    │   END   │
                    └─────────┘
```

# FIG. 10

START

S11
CAUSE PULSED LIGHT TO BE
INCIDENT ON FIRST CORE FROM
INCIDENCE END OF MCF

S12
RECEIVE SECOND BACKSCATTERED LIGHT
EMITTED FROM SECOND CORE
AT INCIDENCE END

S13
ACQUIRE INTENSITY OF SECOND
BACKSCATTERED LIGHT AT EACH TIME IN
ASSOCIATION WITH EACH POSITION OF MCF

S14
CALCULATE LIGHT INTENSITY INTEGRAL
VALUE OBTAINED BY INTEGRATING LIGHT
INTENSITY OF SECOND BACKSCATTERED
LIGHT CORRESPONDING TO EACH POSITION
OF MCF FROM INCIDENCE END
TO EMISSION END

S31
ACQUIRE LOSS VALUE
REPRESENTING TRANSMISSION
LOSS OF MCF WHEN LIGHT MOVES
FROM INCIDENCE END TO EMISSION END

S15
CALCULATE RATIO OF LIGHT INTENSITY
INTEGRAL VALUE TO LOSS VALUE

S16
MULTIPLY CALCULATED RATIO
BY COEFFICIENT

S17
CALCULATE BACKSCATTERING XT

END

# FIG. 11

START

CAUSE PULSED LIGHT TO BE INCIDENT ON FIRST CORE
FROM INCIDENCE END OF MCF — S11

S12

RECEIVE SECOND BACKSCATTERED
LIGHT EMITTED FROM SECOND CORE
AT INCIDENCE END

S22

RECEIVE FIRST BACKSCATTERED
LIGHT EMITTED FROM FIRST CORE
AT INCIDENCE END

S13

ACQUIRE INTENSITY OF SECOND
BACKSCATTERED LIGHT
AT EACH TIME IN ASSOCIATION
WITH EACH POSITION OF MCF

S23

ACQUIRE INTENSITY OF FIRST
BACKSCATTERED LIGHT
AT EACH TIME IN ASSOCIATION
WITH EACH POSITION OF MCF

S14

CALCULATE LIGHT INTENSITY INTEGRAL
VALUE OBTAINED BY INTEGRATING LIGHT
INTENSITY OF SECOND BACKSCATTERED
LIGHT CORRESPONDING TO EACH
POSITION OF MCF FROM INCIDENCE END
TO EMISSION END

S24

CALCULATE LOSS VALUE REPRESENTING
TRANSMISSION LOSS OF MCF
WHEN PULSED LIGHT MOVES
FROM INCIDENCE END TO EMISSION END

CALCULATE RATIO OF LIGHT INTENSITY INTEGRAL VALUE
TO LOSS VALUE — S15

CALCULATE BACKSCATTERING XT — S18

END

# FIG. 12

EP 4 585 894 A1

## INTERNATIONAL SEARCH REPORT

| International application No. |
|---|
| **PCT/JP2023/024437** |

**A.    CLASSIFICATION OF SUBJECT MATTER**

***G01M 11/02***(2006.01)i
FI:    G01M11/02 J

According to International Patent Classification (IPC) or to both national classification and IPC

**B.    FIELDS SEARCHED**

Minimum documentation searched (classification system followed by classification symbols)

G01M11/00-11/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus (JDreamIII); JST7580 (JDreamIII); JSTChina (JDreamIII); Science Direct; SPIE Digital Library; OPTICA

**C.    DOCUMENTS CONSIDERED TO BE RELEVANT**

| Category* | Citation of document, with indication, where appropriate, of the relevant passages | Relevant to claim No. |
|---|---|---|
| A | HAYASHI, T. Accuracy of analytical expressions for Rayleigh backscattered crosstalk in bidirectional multi-core fiber transmissions. Optics Express. 20 June 2022, vol. 30, Issue 13, pp. 23943-23952, https://doi.org/10.1364/OE.460565<br>"4. Approximate expression for Rayleigh scattered crosstalk" | 1-9 |
| A | CN 111555803 A (ZHONGTIAN BROADBAND TECHNOLOGY CO., LTD.) 18 August 2020 (2020-08-18) | 1-9 |
| A | WO 2022/101958 A1 (NIPPON TELEGRAPH & TELEPHONE) 19 May 2022 (2022-05-19) | 1-9 |
| A | US 6366347 B1 (FRANCE TELECOM) 02 April 2002 (2002-04-02) | 1-9 |

☐ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 August 2023** | **22 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/024437**

| Patent document cited in search report | | | Publication date (day/month/year) | Patent family member(s) | | | Publication date (day/month/year) |
|---|---|---|---|---|---|---|---|
| CN | 111555803 | A | 18 August 2020 | (Family: none) | | | |
| WO | 2022/101958 | A1 | 19 May 2022 | (Family: none) | | | |
| US | 6366347 | B1 | 02 April 2002 | EP | 982577 | A1 | |
| | | | | FR | 2782799 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022141933 A

- JP 2012202827 A

**Non-patent literature cited in the description**

- **M. NAKAZAWA**. Nondestructive measurement of mode couplings along a multi-core fiber using a synchronous multi-channel OTDR. *Opt.Express*, 2012, vol. 20 (11), 12530-12540

- Optical Time Domain Reflectometry for Simultaneously CharacterizingForward and Backward Crosstalk along Multi-core Fibers. **A. NAKAMURA**. Journal of Lightwave Technology. IEEE, 2022, 1-7
- Definitions and test methods for linear, deterministic attributes of single-mode fibre and cable. *Recommendation ITU-TG. 650.1*, 2020